# EUROPÄISCHE PATENTSCHRIFT

(11) **EP 3 238 985 B1**
(45) Veröffentlichungstag und Bekanntmachung des Hinweises auf die Patenterteilung: **30.10.2019**
(21) Anmeldenummer: 17164169.9
(22) Anmeldetag: 31.03.2017
(51) Int. Cl.: B60N 2/50

(54) **REGELBARES DÄMPFUNGSSYSTEM FÜR EINEN FAHRZEUGSITZ**
VARIABLE DAMPING SYSTEM FOR A VEHICLE SEAT
SYSTÈME D'AMORTISSEMENT RÉGLABLE POUR UN SIÈGE DE VÉHICULE AUTOMOBILE

(30) Priorität: 25.04.2016 DE 102016107625
(43) Veröffentlichungstag der Anmeldung: 01.11.2017
(73) Patentinhaber: GRAMMER AG, 92224 Amberg (DE)
(72) Erfinder: Haller, Erwin, 92262 Birgland (DE); Kolb, Jens, 92281 Königstein (DE); Krivenkov, Konstantin, 92224 Amberg (DE)
(74) Vertreter: Hannke, Christian

(56) Entgegenhaltungen:
- WO-A1-01/81888
- DE-A1- 10 020 521
- DE-B3-102004 054 325
- US-A- 5 390 121

## Beschreibung

Die Erfindung betrifft ein regelbares Dämpfungssystem für einen Fahrzeugsitz zum Dämpfen von Schwingungen eines sitzteilseitigen Oberteils relativ zu einem karosserieseitigen Unterteil in wenigstens einer Raumrichtung (X, Y, Z), wobei zum Dämpfen mindestens ein zwischen dem sitzteilseitigen Oberteil und dem karosserieseitigen Unterteil angeordnetes durch eine Regeleinrichtung regelbares Dämpfungselement vorgesehen ist.

Insbesondere bei geländegängigen Fahrzeugen, wie Baumaschinen und Traktoren, hat der Fahrzeugsitz großen Einfluss auf den Fahrkomfort. Übermäßige Schwingungen, Stöße und Bewegungen, welche von der Fahrbahnoberfläche über den Fahrzeugsitz auf die sich auf dem Sitz befindlichen Person übertragen werden, können zu Ermüdung und längerfristig auch zu einer Beeinträchtigung der Gesundheit, wie beispielsweise Rückenschmerzen oder Knochenverschleiß, der Person führen. Üblicherweise werden Dämpfungs-/ Federungssysteme eingesetzt, um derartige Einflüsse zu minimieren. Hierzu sind verschiedene prinzipielle Federungsvarianten bekannt, die sich hinsichtlich Komplexität und Energiebedarf unterscheiden: passive, semi-aktive und aktive Federungssysteme. Bei passiven Fahrzeugsitzen sind die Eigenschaften der Systemkomponenten konstruktiv vorgegeben und können während des Betriebs nicht verändert werden. Bei semi-aktiven Federungssystemen können die dissipativen Eigenschaften der Sitzfederung abhängig von der jeweiligen Situation gezielt beeinflusst werden. Entweder kann die Härte des Dämpfers verstellt und/oder die Steifigkeit der Feder angepasst werden. Bei aktiven Systemen kann durch geeignete Stellglieder zusätzlich Energie in das System eingebracht werden.

Herkömmliche Sitzfederungen weisen bei konstanten Amplituden der Anregung im Bereich rund um die Resonanzfrequenz einen relativ starken Anstieg der Schwingungsamplituden der Sitzfläche auf. Dies führt zur Verstärkung der Anregung und zur einer signifikanten Verschlechterung sowohl des objektiven als auch des subjektiven Fahrkomforts. Wird der Sitz als Schwingungssystem betrachtet, kann diesem eine Eigenfrequenz zugeordnet werden. Wird dieses System durch harmonische Schwingungen des Fahrzeugbodens erregt, so schwingt es mit der gleichen Frequenz wie das Fahrzeug, jedoch mit anderer Amplitude. Bei erregenden Frequenzen von 0 bis zum √2-fachen der Eigenfrequenz des Schwingungssystems werden die auf den Sitz übertragenen Schwingungen verstärkt, wobei bei der Resonanzfrequenz die Verstärkung maximal ist. Oberhalb des √2-fachen der Eigenfrequenz setzt eine Verminderung der eingeleiteten Schwingungen ein, die mit steigender Erregerfrequenz zunimmt. Dieser Effekt wird jedoch durch die Dämpfung des Systems beeinflusst. Je höher die Dämpfung, desto geringer die vermindernde Wirkung. Dagegen führt eine geringe Dämpfung des Sitzes zu einem verminderten Sitzkomfort unterhalb des √2-fachen der Eigenfrequenz

Zur Reduktion der Schwingungsamplituden im Bereich der Resonanzfrequenz werden in der Regel Dämpfer mit verstellbarer Kraft und spezielle Ansteuerungsalgorithmen eingesetzt. Die Verstellung der Dämpfercharakteristik kann adaptiv oder semiaktiv erfolgen.

Bei einer adaptiven Verstellung werden die Amplituden der Relativgeschwindigkeit mit einem oder mehreren Schwellwerten verglichen. Liegt die Amplitude der Relativgeschwindigkeit unterhalb des definierten Schwellwertes, wird der Dämpfer mit einer maximalen Kraft betrieben, um den Anstieg der Schwingungsamplituden im Resonanzbereich zu unterdrücken. Oberhalb dieses Schwellwertes wird der Dämpfer nahezu komplett ausgeschaltet, um den Fahrkomfort im Bereich oberhalb der Resonanzfrequenz zu erhöhen. Eine solche Ansteuerung zeigt aber deutliche Defizite im Fahrkomfort, wenn eine Sitzfederung gleichzeitig im Bereich unterhalb und oberhalb der Resonanzfrequenz angeregt wird.

Bei einer semiaktiven Verstellung z.B. durch den weit verbreiteten Sky-Hook-Algorithmus wird der beschriebene Nachteil durch Verwendung einer zusätzlichen Bewegungsgröße, in diesem Fall der Beschleunigung der Sitzfläche, eliminiert. Die Kennlinie des Dämpfers wird in Abhängigkeit von den absoluten und relativen Bewegungsgrößen an die jeweilige Fahrsituation angepasst. Die Eliminierung des Anstieges der Schwingungsamplituden im Bereich der Resonanzfrequenz wird also durch Installation eines zusätzlichen Sensors für die Überwachung der absoluten Bewegung der Sitzfläche erkauft. Ein gattungsgemässes Dämpfungssystem für einen Fahrzeugsitz ist aus der DE102004054325 bekannt.

Es ist die Aufgabe der vorliegenden Erfindung ein Dämpfersystem zur Verfügung zu stellen, welches die vorangehend genannten Nachteile überwindet. Des Weiteren ist es die Aufgabe einen Fahrersitz mit einem solchen Dämpfersystem zur Verfügung zu stellen. Eine weitere Aufgabe der Erfindung ist es, ein Verfahren zum Regeln eines regelbaren Dämpfungssystems zur Verfügung zu stellen, welches die vorangehend genannten Nachteile überwindet.

Diese Aufgabe wird gelöst durch ein regelbares Dämpfungssystem für einen Fahrzeugsitz zum Dämpfen von Schwingungen eines sitzteilseitigen Oberteils relativ zu einem karosserieseitigen Unterteil in wenigstens einer Raumrichtung (X, Y, Z), wobei zum Dämpfen mindestens ein zwischen dem sitzteilseitigen Oberteil und dem karosserieseitigen Unterteil angeordnetes durch eine Regeleinrichtung regelbares Dämpfungselement vorgesehen ist. Das Dämpfungssystem zeichnet sich weiterhin dadurch aus, dass durch eine Sensoreinrichtung zumindest eine relative Bewegungsgröße und eine Änderung der relativen Bewegungsgröße des sitzteilseitigen Oberteils relativ zu dem karosserieseitigen Unterteil bestimmbar ist und eine erste Dämpfungskraft des Dämpfungselements durch die Regelreinrichtung in Abhängigkeit von der zumindest einen relativen Bewegungsgröße und der Frequenz der Änderung der relativen Bewegungsgröße einstellbar ist.

Das Dämpfungselement kann hierbei auf einer beliebigen Dämpfertechnologie basieren. Denkbar wären elektro-/ bzw. magnetorheologische Dämpfer oder aber auch Hydraulikdämpfer mit elektrisch oder mechanisch gesteuertem Durchfluss oder aber auch Hydraulikdämpfer in Kombination mit einer Hydraulikfluidpumpe. Demnach kann die Dämpfung vorzugsweise semiaktiv bzw. aktiv sein. Die Dämpferkraft wird oft auch als Dämpfungsintensität bezeichnet.

Im Vergleich zu dem beschriebenen Stand der Technik werden zur Einstellung der ersten Dämpfungskraft nur relative Bewegungsgrößen verwendet. Das bedeutet, dass die absolute Bewegung der Sitzfläche nicht bestimmt werden muss, um eine effektive Unterdrückung des Anstiegs der Schwingungsamplitude in der Nähe der Resonanzfrequenz zu erreichen.

Erfindungsgemäß ist das regelbare Dämpfungssystem zum Dämpfen einer Bewegung eines sitzteilseitigen Oberteils relativ zu einem karosserieseitigen Unterteil in wenigstens einer Raumrichtung (X, Y, Z) ausgelegt. Demnach kann eine Dämpfung von Schwingungen in vertikaler Richtung (Z) aber auch eine Dämpfung von Horizontalschwingungen (X, Y) erfolgen. Durch das regelbare Dämpfungssystem kann somit ein ausschließlich vertikal wirkendes Dämpfungssystem, ein Horizontaldämpfungssystem oder ein Dämpfungssystem, welches in alle drei Raumrichtungen (X, Y, Z) wirkt, bereitgestellt werden.

Im Folgenden werden die Begriffe Höhenposition, minimal einstellbare Höhenposition, maximal einstellbare Höhenposition und Höhen-Einstelleinrichtung verwendet. Diese Begriffe werden hierbei nicht nur in Bezug zu einer vertikalen Auslenkung (Z) verstanden, sondern gelten analog auch in jeder anderen Raumrichtung (X, Y). Eine entsprechende Höhenposition bezieht sich somit auf den jeweiligen Dämpfungsweg des Dämpfungselements.

Erfindungsgemäss ist die erste Dämpfungskraft des Dämpfungselements durch die Regelreinrichtung in Abhängigkeit von einer Geschwindigkeit, einer Beschleunigung und dem Ruck des sitzteilseitigen Oberteils relativ zu dem karosserieseitigen Unterteil einstellbar. Der Ruck ist definiert als die Ableitung der Beschleunigung nach der Zeit, also die zweite zeitliche Ableitung der Geschwindigkeit und die dritte zeitliche Ableitung des Ortsvektors. Demnach umfasst die Sensoreinrichtung vorzugsweise einen Positionssensor und einen Geschwindigkeitssensor. Vorzugsweise ist die Geschwindigkeit aus einer zeitdiskreten Abtastung der Position berechenbar.

Nach einer besonders bevorzugten Ausführungsform ist die durch die Regelreinrichtung einstellbare erste Dämpfungskraft des Dämpfungselements proportional zu der Summe aus einem Geschwindigkeitssummand, einem Beschleunigungssummand und einem Rucksummand. Bevorzugt ist der Geschwindigkeitssummand das Produkt eines ersten frequenzabhängigen Verstärkungsfaktors und dem Wert der Geschwindigkeit ist. Weiter bevorzugt ist der Beschleunigungssummand das Produkt eines zweiten frequenzabhängigen Verstärkungsfaktors und dem Wert der Beschleunigung. Weiter bevorzugt ist der Rucksummand das Produkt eines dritten frequenzabhängigen Verstärkungsfaktors und dem Wert des Rucks. Der Ruck ist definiert als die Ableitung der Beschleunigung nach der Zeit, also die zweite zeitliche Ableitung der Geschwindigkeit und die dritte zeitliche Ableitung des Ortsvektors. Vorzugsweise wird zur Reduktion des Anstieges der Schwingungsamplituden des sitzteilseitigen Oberteils im Bereich der Resonanzfrequenz die Dämpfungskraft für jeden Zeitschritt durch kontinuierliche Manipulation der Summe aus den aktuellen Werten der folgenden Bewegungsgrößen gebildet: relative Geschwindigkeit, relative Beschleunigung und relativer Ruck. Jede Größe wird dabei mit einem Verstärkungsfaktor versehen, welcher die Stärke ihres Einflusses auf die Summe und dementsprechend auf die erste Dämpfungskraft definiert. Der jeweilige Verstärkungsfaktor kann neben der Frequenz auch von weiteren Parametern abhängen, beispielsweise dem Restfederfederweg oder der Dämpfervoreinstellung.

Vorzugsweise steigt der zweite Verstärkungsfaktor linear mit der Frequenz. Weiter bevorzugt steigt der dritte Verstärkungsfaktor quadratisch mit der Frequenz. Vorteilhafterweise ist der zeitliche Verlauf der Beschleunigung um 90° und der zeitliche Verlauf des Rucks um 180° phasenverschoben bezüglich des zeitlichen Verlaufs der Geschwindigkeit.

Der durch die Sensoreinrichtung gemessene Frequenzbereich weist vorteilhaft zumindest eine Resonanzfrequenz auf. Bevorzugt steigen in einem Frequenzintervall, welches sich von einer Anfangsfrequenz bis zu der Resonanzfrequenz erstreckt, der Wert des Beschleunigungssummanden und des Rucksummanden an, wodurch die erste Dämpfungskraft des Dämpfungselements ansteigt. Dieser vorteilhafte Anstieg ist darin begründet, dass der zweite und dritte Verstärkungsfaktor linear bzw. quadratisch mit der Frequenz ansteigen. Bevorzugt dominiert in einem Frequenzintervall, welches sich von der Resonanzfrequenz bis zu einer Endfrequenz erstreckt der Rucksummand wodurch die erste Dämpfungskraft des Dämpfungselements absinkt. Der Rucksummand dominiert durch die quadratische Frequenzabhängigkeit des dritten Verstärkungsfaktors. Aufgrund des gegenphasigen Verhaltens der Geschwindigkeit und des Rucks sinkt die erste Dämpfungskraft des Dämpfungselements ab. Somit ist ein hoher objektiver und subjektiver Fahrkomfort sowohl bei nieder- als auch bei hochfrequenten Anregungen ermöglicht. Demnach kann vorteilhaft durch die Festlegung der entsprechenden Verstärkungsparameter der Einfluss jedes Summanden auf die Summe und somit auf die Stärke der ersten Dämpfungskraft definiert werden. Die durch Einwirkung einzelner Summanden signifikant erhöhte Kraft des Dämpfers kann den unerwünschten Anstieg der Schwingungsamplituden im Bereich der Resonanzfrequenz erheblich reduzieren.

Da die Lage der Resonanzfrequenz der Sitzfederung mit Luftfeder nahezu invariant gegenüber Veränderung der Last auf der Sitzfläche ist, können die für jeden Summanden festgelegten Verstärkungsfaktoren für alle Betriebsbedingungen gleich bleiben. Wird aber eine andere Art der Feder im System verwendet, können die Faktoren entsprechend der Last auf der Sitzfläche angepasst werden.

Nach einem weiteren Aspekt der Erfindung ist eine zweite Dämpfungskraft des Dämpfungselements durch die Regelreinrichtung einstellbar, wobei diese zweite Dämpfungskraft durch die Regeleinrichtung, anhand eines Gesamtdämpfungswegs des Dämpfungselements, einer durch eine Dämpfungs-Einstelleinrichtung voreinstellbaren Grunddämpfungskraft, einer durch die Sensoreinrichtung messbaren Position des sitzteilseitigen Oberteils relativ zu dem karosserieseitigen Unterteil und einer Bewegungsrichtung des sitzteilseitigen Oberteils relativ zu dem karosserieseitigen Unterteil, bestimmbar ist, wobei die Bewegungsrichtung aus zumindest zwei durch die Sensoreinrichtung messbaren, zeitlich aufeinanderfolgenden Positionen des sitzteilseitigen Oberteils relativ zu dem karosserieseitigen Unterteil bestimmbar ist. Das Dämpferverhalten des Dämpfungssystems kann also in Abhängigkeit von der nutzerspezifischen Grunddämpfungskraft, der Position und der Bewegung des sitzteilseitigen Oberteils vorzugsweise innerhalb des zur Verfügung stehenden Dämpfungswegs eingestellt/geregelt werden. Die zweite Dämpfungskraft ist demnach unabhängig vom Betrag der Geschwindigkeit, aber abhängig von der Bewegungsrichtung und der aktuellen Position des sitzteilseitigen Oberteils relativ zu dem karosserieseitigen Unterteil, einstellbar. Die Bestimmung der zweiten Dämpfungskraft hat den Vorteil, dass bereits bei geringen Ein-Ausfedergeschwindigkeiten eine gewisse Dämpfungskraft eingestellt ist.

Vorzugsweise ist eine maximale Verlagerung der Position des sitzteilseitigen Oberteils relativ zu dem karosserieseitigen Unterteil durch den Gesamtdämpfungsweg des Dämpfungselements gegeben, welcher durch ein oberes und ein unteres Dämpfungswegende begrenzt ist. Bevorzugt ist eine den Sollwert der Regelung darstellende Höhenposition des sitzteilseitigen Oberteils relativ zu dem karosserieseitigen Unterteil durch eine Höhen-Einstelleinrichtung einstellbar. Idealerweise liegt eine maximal einstellbare Höhenposition in einem Bereich des Gesamtdämpfungswegs, welcher sich bevorzugt zwischen einer Gesamtdämpfungswegmitte und dem oberen Dämpfungswegende erstreckt. Überdies ist es vorteilhaft, wenn eine minimal einstellbare Höhenposition in einem Bereich des Gesamtdämpfungswegs liegt, welcher sich zwischen einer Gesamtdämpfungswegmitte und dem unteren Dämpfungswegende erstreckt. Demnach ist also die voreingestellte Höhenposition der Sollwert der Regelung und die aktuelle Position des sitzteilseitigen Oberteils relativ zu dem karosserieseitigen Unterteil ist der Istwert der Regelung. Im Folgenden wird unter der Bezeichnung oben eine Richtung zu dem sitzteilseitigen Oberteil beziehungsweise unter der Bezeichnung unten eine Richtung zu dem karosserieseitigen Unterteil. Die durch die Regeleinrichtung eingestellte zweite Dämpfungskraft ist bevorzugt anhand einer voreingestellten nutzerspezifischen Grunddämpfungskraft, einem Restdämpfungsweg, welcher durch den Gesamtdämpfungsweg und der aktuellen Position des sitzteilseitigen Oberteils bestimmbar ist, einer voreingestellten Höhenposition und der Bewegungsrichtung des sitzteilseitigen Oberteils bestimmbar. Beispielsweise weist ein vertikal gefederter Sitz einen Gesamtdämpfungsweg von 180 mm auf. Der Bereich des Gesamtdämpfungswegs, welcher für die Höhenverstellung verwendet wird und durch die maximale und minimale einstellbare Höhenposition begrenzt ist beträgt z.B. 80 mm. Somit kommt ein günstigster zur Verfügung stehender Federweg von 90 mm in beide Richtungen beziehungsweise +/-50 mm und -/+130 mm in ungünstigen Fällen zustande.

Nach einer bevorzugten Ausführungsform ist bei einer Verlagerung der Position des sitzteilseitigen Oberteils ausgehend von der Höhenposition die durch die Regeleinrichtung einstellbare zweite Dämpfungskraft des Dämpfungselements innerhalb eines Komfortbereichs des Gesamtdämpfungswegs kleiner als außerhalb des Komfortbereichs. Der Komfortbereich ist dabei durch eine obere und eine untere Komfortgrenze begrenzt. Idealerweise ist der Komfortbereich ein Teilbereich des Bereichs des Gesamtdämpfungswegs, welcher durch die maximal einstellbare Höhenposition und die minimal einstellbare Höhenposition begrenzt ist. Bevorzugt ist die zweite Dämpfungskraft innerhalb des Komfortbereichs konstant. Denkbar wäre auch, dass die zweite Dämpfungskraft mit dem Abstand zwischen der Position des sitzteilseitigen Oberteils und der Höhenposition ansteigend bzw. fallend ist. Vorteilhaft kann der Komfortbereich durch Parametrierung gemäß individuellen Präferenzen oder an die Kinematik des Sitzes angepasst werden, so dass ein komfortabler weicher Mittenbereich subjektiv fühlbar ist. Dabei ist es vorteilhaft, wenn bei einer Verlagerung der Position des sitzteilseitigen Oberteils ausgehend von der maximalen oder der minimalen Höhenposition der Komfortbereich auf die maximale beziehungsweise die minimale Höhenposition beschränkt ist.

Nach einer weiteren bevorzugten Ausführungsform wächst bei einer Verlagerung der Position des sitzteilseitigen Oberteils, ausgehend von der Höhenposition, die durch die Regeleinrichtung einstellbare zweite Dämpfungskraft des Dämpfungselements, außerhalb des Komfortbereichs des Gesamtdämpfungswegs, linear mit dem Abstand zwischen der Position des sitzteilseitigen Oberteils und der Höhenposition an. Es wäre jedoch auch ein Anwachsen gemäß einer anderen Polynomfunktion denkbar.

Nach einer weiteren besonders bevorzugten Ausführungsform ist bei einer Verlagerung der Position des sitzteilseitigen Oberteils, in Richtung zu der Höhenposition, durch die Regeleinrichtung eine Dämpfungskraft des Dämpfungselements einstellbar, welche lediglich der voreingestellten Grunddämpfungskraft entspricht. Demnach kann bei einer Rückbewegung des sitzteilseitigen Oberteils auf die positionsunabhängige vorgewählte Grunddämpfungskraft zurückgestellt werden, wodurch das Zurückfedern sanfter empfunden wird. Gleichzeitig hat eine Person auf dem Sitz subjektiv das Gefühl zum Ende des Dämpfungswegs hin durch eine Dämpfungserhöhung geschützt zu werden. Ferner wird durch diese Ansteuerart die Höhenposition des Sitzes stabilisiert, da der Sitz weicher zur Ausgangslage zurückfedert.

Gemäß einer weiteren bevorzugten Ausführungsform ist durch die Regeleinrichtung eine dritte Dämpfungskraft des Dämpfungselements einstellbar. Vorzugsweise ist diese dritte Dämpfungskraft anhand des Gesamtdämpfungswegs, der voreinstellbaren Grunddämpfungskraft, der Position des sitzteilseitigen Oberteils relativ zu dem karosserieseitigen Unterteil, der Bewegungsrichtung, dem Betrag der Geschwindigkeit und eines Restdämpfungswegs des sitzteilseitigen Oberteils relativ zu dem karosserieseitigen Unterteil bestimmbar. Idealerweise ist der Restdämpfungsweg aus dem Gesamtdämpfungsweg und der Position des sitzteilseitigen Oberteils relativ zu dem karosserieseitigen Unterteil bestimmbar. Vorzugsweise ist die Geschwindigkeit aus zumindest zwei zeitlich aufeinanderfolgenden Positionen des sitzteilseitigen Oberteils relativ zu dem karosserieseitigen Unterteil bestimmbar.

Vorzugsweise weist der durch die Sensoreinrichtung gemessene Frequenzbereich zumindest eine Resonanzfrequenz auf. Bevorzugt entspricht in einem Frequenzintervall, welches sich von einer Anfangsfrequenz bis zu der Endfrequenz erstreckt und die Resonanzfrequenz enthält, die Gesamtdämpfungskraft des Dämpfungselements der ersten Dämpfungskraft. Vorteilhafterweise ist außerhalb dieses Frequenzintervalls die Gesamtdämpfungskraft des Dämpfungselements aus der Summe von zweiter und dritter Dämpfungskraft gegeben. Demzufolge kann in dem Frequenzintervall um die Resonanzfrequenz eine erhöhte Dämpfungskraft zur Verfügung gestellt werden, wodurch ein Anstieg der Schwingungsamplitude unterdrückt wird. Außerhalb des Frequenzintervalls kann zur Vermeidung/Vorbeugung von Endanschlägen die momentane Geschwindigkeit des sitzteilseitigen Oberteils mit dem noch zur Verfügung stehenden Dämpfungsweg verglichen und ggf. eine zusätzliche dritte Dämpfungskraft der zweiten Dämpfungskraft überlagert werden. Die Bestimmung der zweiten Dämpfungskraft hat den Vorteil, dass bereits bei geringen Ein-/ Ausfedergeschwindigkeiten eine gewisse Dämpfkraft eingestellt ist. Eine Überlagerung der zweiten und der dritten Dämpfungskraft hat zum Vorteil, dass der progressive Übergang in die harte Bedämpfung zum Dämpfungswegende hin oder auch bei höheren Geschwindigkeiten weniger stark und somit angenehmer ausgeprägt ist. Der Übergang in die endlagen- bzw. geschwindigkeitsabhängige Dämpfung kann somit homogener (günstig für die Isolationswirkung) ausgelegt werden. Umgekehrt kann bei harter Dämpfervorwahl bei Auftreten eines plötzlichen Stoßes die Dämpfung auf weich geschaltet werden, um möglichst wenig Energie auf das sitzteilseitige Oberteil weiter zu leiten, wenn ausreichend Federweg vorhanden ist. Es ist somit auch eine Überlagerung der zweiten Dämpfungskraft im negativen Sinn möglich.

Vorzugsweise ist bei einer Verlagerung der Position des sitzteilseitigen Oberteils relativ zu dem karosserieseitigen Unterteil, ausgehend von der maximalen Höhenposition in Richtung des oberen Dämpfungswegendes oder bei einer Verlagerung der Position des sitzteilseitigen Oberteils relativ zu dem karosserieseitigen Unterteil, ausgehend von der minimalen Höhenposition in Richtung des unteren Dämpfungswegendes durch die Regeleinrichtung eine Dämpfungskraft des Dämpfungselements einstellbar, welche um einen Endanschlagschutzfaktor erhöht ist. Idealerweise ist bei einer Verlagerung der Position des sitzteilseitigen Oberteils in entgegengesetzter Richtung durch die Regeleinrichtung eine Dämpfungskraft des Dämpfungselements ohne Endanschlagschutzfaktor einstellbar. Demnach kann ein Endanschlag des sitzteilseitigen Oberteils effektiv unterbunden werden, wodurch sich ein erhöhter Sitzkomfort ergibt. Bevorzugt ist bei einer Verlagerung in entgegengesetzter Richtung der Endanschlagschutzfaktor nicht wirksam. Durch eine solche Maßnahme kann das sitzteilseitige Oberteil möglichst schnell in die Sollposition zurückgeführt werden, wodurch sich eine weitere Verbesserung des Sitzkomforts ergibt.

Nach einer weiteren bevorzugten Ausführungsform umfasst das regelbare Dämpfungssystem einen Beschleunigungssensor. Anregungen werden von dem karosserieseitigen Unterteil auf das sitzteilseitigen Oberteil übertragen. Demnach ist es bevorzugt, wenn der Beschleunigungssensor an dem karosserieseitigen Unterteil angeordnet ist. Durch eine solche vorteilhafte Nutzung von Beschleunigungswerten durch die Regeleinrichtung ist es möglich, die für die Regelung zu bestimmenden notwendigen Geschwindigkeiten zeitlich effektiver zu bestimmen, wodurch eine schnellere Reaktion des Dämpfungssystems auf plötzlich auftretende Auslenkungen des sitzteilseitigen Oberteils relativ zu dem karosserieseitigen Unterteil erreicht werden kann. Außerdem ermöglicht der Beschleunigungssensor eine Identifikation der Fahrerbewegung, d.h. es kann unterschieden werden, ob eine Bewegung des Oberteils infolge der Fahrerbewegung und/oder infolge einer Anregung durch Schwingungen des Unterteils erfolgt.

Die Aufgabe wird weiterhin gelöst durch einen Fahrzeugsitz mit einem regelbaren Dämpfungssystem nach einer der vorhergehenden Ausführungsformen.

Die Aufgabe wird ebenso gelöst durch ein Verfahren zum Regeln eines regelbaren Dämpfungssystems für einen Fahrzeugsitz zum Dämpfen von Schwingungen eines sitzteilseitigen Oberteils relativ zu einem karosserieseitigen Unterteil in wenigstens einer Raumrichtung (X, Y, Z), wobei zum Dämpfen mindestens ein zwischen dem sitzteilseitigen Oberteil und dem karosserieseitigen Unterteil angeordnetes durch eine Regeleinrichtung regelbares Dämpfungselement vorgesehen ist, wobei das Verfahren folgende Schritte umfasst:
Bestimmen zumindest einer relativen Bewegungsgröße und einer Änderung der relativen Bewegungsgröße des sitzteilseitigen Oberteils relativ zu dem karosserieseitigen Unterteil durch eine Sensoreinrichtung;
Einstellen einer ersten Dämpfungskraft des Dämpfungselements durch die Regeleinrichtung, wobei die erste Dämpfungskraft durch die Regeleinrichtung in Abhängigkeit von der zumindest einen relativen Bewegungsgröße und der Frequenz der Änderung der relativen Bewegungsgröße bestimmt wird.

Vorzugsweise wird erste Dämpfungskraft des Dämpfungselements durch die Regelreinrichtung in Abhängigkeit von einer Geschwindigkeit, einer Beschleunigung und dem Ruck des sitzteilseitigen Oberteils relativ zu dem karosserieseitigen Unterteil eingestellt. Der Ruck ist definiert als die Ableitung der Beschleunigung nach der Zeit, also die zweite zeitliche Ableitung der Geschwindigkeit und die dritte zeitliche Ableitung des Ortsvektors.

Bevorzugt ist die durch die Regelreinrichtung einstellte erste Dämpfungskraft des Dämpfungselements proportional zu der Summe aus einem Geschwindigkeitssummanden, einem Beschleunigungssummanden und einem Rucksummanden.

Vorzugsweise ist der Geschwindigkeitssummand das Produkt eines ersten frequenzabhängigen Verstärkungsfaktors und dem Wert der Geschwindigkeit. Weiter bevorzugt ist der Beschleunigungssummanden das Produkt eines zweiten frequenzabhängigen Verstärkungsfaktors und dem Wert der Beschleunigung und der Rucksummand das Produkt eines dritten frequenzabhängigen Verstärkungsfaktors und dem Wert des Rucks. Der Ruck ist definiert als die Ableitung der Beschleunigung nach der Zeit, also die zweite zeitliche Ableitung der Geschwindigkeit und die dritte zeitliche Ableitung des Ortsvektors. Der jeweilige Verstärkungsfaktor kann neben der Frequenz auch von weiteren Parametern abhängen, beispielsweise dem Restfederfederweg oder der Dämpfervoreinstellung.

Nach einer bevorzugten Ausführungsform weist der durch die Sensoreinrichtung gemessene Frequenzbereich zumindest eine Resonanzfrequenz auf.

Vorzugsweise steigen in einem Frequenzintervall, welches sich von einer Anfangsfrequenz bis zu der Resonanzfrequenz erstreckt, der Wert des Beschleunigungssummanden und des Rucksummanden an, wodurch eine ansteigende erste Dämpfungskraft des Dämpfungselements eingestellt wird. Vorteilhafterweise dominiert in einem Frequenzintervall, welches sich von der Resonanzfrequenz bis zu einer Endfrequenz erstreckt der Rucksummand, wodurch eine absinkende erste Dämpfungskraft des Dämpfungselements eingestellt wird.

Nach einer weiteren bevorzugten Ausführungsform wird durch die Regelreinrichtung eine zweite Dämpfungskraft des Dämpfungselements eingestellt. Diese zweite Dämpfungskraft wird durch die Regeleinrichtung anhand eines Gesamtdämpfungswegs des Dämpfungselements, einer durch eine Dämpfungs-Einstelleinrichtung voreinstellbaren Grunddämpfungskraft, einer durch eine Sensoreinrichtung gemessenen Position des sitzteilseitigen Oberteils relativ zu dem karosserieseitigen Unterteil und einer Bewegungsrichtung des sitzteilseitigen Oberteils relativ zu dem karosserieseitigen Unterteil bestimmt. Die Bewegungsrichtung wird aus zumindest zwei durch die Sensoreinrichtung gemessenen, zeitlich aufeinanderfolgenden Positionen des sitzteilseitigen Oberteils relativ zu dem karosserieseitigen Unterteil bestimmt.

Vorzugsweise ist eine maximale Verlagerung der Position des sitzteilseitigen Oberteils relativ zu dem karosserieseitigen Unterteil durch den Gesamtdämpfungsweg des Dämpfungselements gegeben, welcher durch ein oberes und ein unteres Dämpfungswegende begrenzt ist. Bevorzugt ist eine den Sollwert der Regelung darstellende Höhenposition des sitzteilseitigen Oberteils relativ zu dem karosserieseitigen Unterteil durch eine Höhen-Einstelleinrichtung einstellbar. Idealerweise liegt eine maximal einstellbare Höhenposition in einem Bereich des Gesamtdämpfungswegs, welcher sich bevorzugt zwischen einer Gesamtdämpfungswegmitte und dem oberen Dämpfungswegende erstreckt. Überdies ist es vorteilhaft wenn eine minimal einstellbare Höhenposition in einem Bereich des Gesamtdämpfungswegs liegt, welcher sich zwischen einer Gesamtdämpfungswegmitte und dem unteren Dämpfungswegende erstreckt.

Nach einer bevorzugten Ausführungsform ist bei einer Verlagerung der Position des sitzteilseitigen Oberteils ausgehend von der Höhenposition, die durch die Regeleinrichtung eingestellte zweite Dämpfungskraft des Dämpfungselements innerhalb eines Komfortbereichs des Gesamtdämpfungswegs kleiner als außerhalb des Komfortbereichs. Der Komfortbereich ist dabei durch eine obere und eine untere Komfortgrenze begrenzt. Idealerweise ist der Komfortbereich ein Teilbereich des Bereichs des Gesamtdämpfungswegs, welcher durch die maximal einstellbare Höhenposition und die minimal einstellbare Höhenposition begrenzt ist. Bevorzugt ist die erste Dämpfungskraft innerhalb des Komfortbereichs konstant. Denkbar wäre auch, dass die zweite Dämpfungskraft mit dem Abstand zwischen der Position des sitzteilseitigen Oberteils und der Höhenposition ansteigend bzw. fallend ist. Vorteilhaft kann der Komfortbereich durch Parametrierung gemäß individuellen Präferenzen oder an die Kinematik des Sitzes angepasst werden, so dass ein komfortabler weicher Mittenbereich subjektiv fühlbar ist. Dabei ist es vorteilhaft wenn bei einer Verlagerung der Position des sitzteilseitigen Oberteils ausgehend von der maximalen oder der minimalen Höhenposition der Komfortbereich auf die maximale beziehungsweise die minimale Höhenposition beschränkt ist.

Nach einer weiteren bevorzugten Ausführungsform wächst bei einer Verlagerung der Position des sitzteilseitigen Oberteils, ausgehend von der Höhenposition, die durch die Regeleinrichtung eingestellte zweite Dämpfungskraft des Dämpfungselements, außerhalb des Komfortbereichs des Gesamtdämpfungswegs, linear mit dem Abstand zwischen der Position des sitzteilseitigen Oberteils und der Höhenposition an.

Nach einer weiteren besonders bevorzugten Ausführungsform wird bei einer Verlagerung der Position des sitzteilseitigen Oberteils, in Richtung zu der Höhenposition, durch die Regeleinrichtung eine Dämpfungskraft des Dämpfungselements eingestellt, welche lediglich der voreingestellten Grunddämpfungskraft entspricht.

Gemäß einer weiteren bevorzugten Ausführungsform wird durch die Regeleinrichtung eine dritte Dämpfungskraft des Dämpfungselements eingestellt. Vorzugsweise wird diese dritte Dämpfungskraft anhand des Gesamtdämpfungswegs, der voreinstellbaren Grunddämpfungskraft, der Position des sitzteilseitigen Oberteils relativ zu dem karosserieseitigen Unterteil, der Bewegungsrichtung, dem Betrag der Geschwindigkeit und eines Restdämpfungswegs des sitzteilseitigen Oberteils relativ zu dem karosserieseitigen Unterteil bestimmt. Idealerweise ist der Restdämpfungsweg aus dem Gesamtdämpfungsweg und der Position des sitzteilseitigen Oberteils relativ zu dem karosserieseitigen Unterteil bestimmt. Vorzugsweise wird die Geschwindigkeit aus zumindest zwei zeitlich aufeinanderfolgenden Positionen des sitzteilseitigen Oberteils relativ zu dem karosserieseitigen Unterteil bestimmt.

Vorzugsweise weist der durch die Sensoreinrichtung gemessene Frequenzbereich zumindest eine Resonanzfrequenz auf. Bevorzugt entspricht in einem Frequenzintervall, welches sich von einer Anfangsfrequenz bis zu der Endfrequenz erstreckt und die Resonanzfrequenz enthält, die durch die Regeleinrichtung eingestellte Gesamtdämpfungskraft des Dämpfungselements der ersten Dämpfungskraft. Vorteilhafterweise ist außerhalb dieses Frequenzintervalls die durch die Regeleinrichtung eingestellte Gesamtdämpfungskraft des Dämpfungselements aus der Summe von zweiter und dritter Dämpfungskraft gegeben.

Vorzugsweise wird bei einer Verlagerung der Position des sitzteilseitigen Oberteils, ausgehend von der maximalen Höhenposition in Richtung des oberen Dämpfungswegendes oder bei einer Verlagerung der Position des sitzteilseitigen Oberteils ausgehend von der minimalen Höhenposition in Richtung des unteren Dämpfungswegendes durch die Regeleinrichtung eine Dämpfungskraft des Dämpfungselements eingestellt, welche um einen Endanschlagschutzfaktor erhöht ist. Idealerweise wird bei einer Verlagerung der Position in entgegengesetzter Richtung eine Dämpfungskraft des Dämpfungselements ohne Endanschlagschutzfaktor eingestellt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Seitenansicht eines Fahrzeugsitzes mit einem Dämpfungssystem;
- Fig.2: das Verhältnis von Schwingungsamplitude des Sitzes zur Amplitude der Anregung in Abhängigkeit von der Frequenz;
- Fig.3a, b, c: je ein Diagramm der zweiten Dämpfungskraft in Abhängigkeit von der Position des sitzteilseitigen Oberteils relativ zu dem karosserieseitigen Unterteil;
- Fig.4: ein Diagramm der zweiten Dämpfungskraft in Abhängigkeit von der Position des sitzteilseitigen Oberteils relativ zu dem karosserieseitigen Unterteil gemäß einer weiteren Ausführungsform;
- Fig.5: eine Algorithmus-Struktur zur Bestimmung der zweiten Dämpfungskraft;
- Fig. 6: eine Algorithmus-Struktur zur Bestimmung der Gesamtdämpfungskraft;
- Fig.7a, b: Diagramme der ersten Dämpfungskraft in Abhängigkeit von der Frequenz;
- Fig. 8: ein Diagramm der dritten Dämpfungskraft in Abhängigkeit von der Position des sitzteilseitigen Oberteils relativ zu dem karosserieseitigen Unterteil gemäß einer weiteren Ausführungsform.

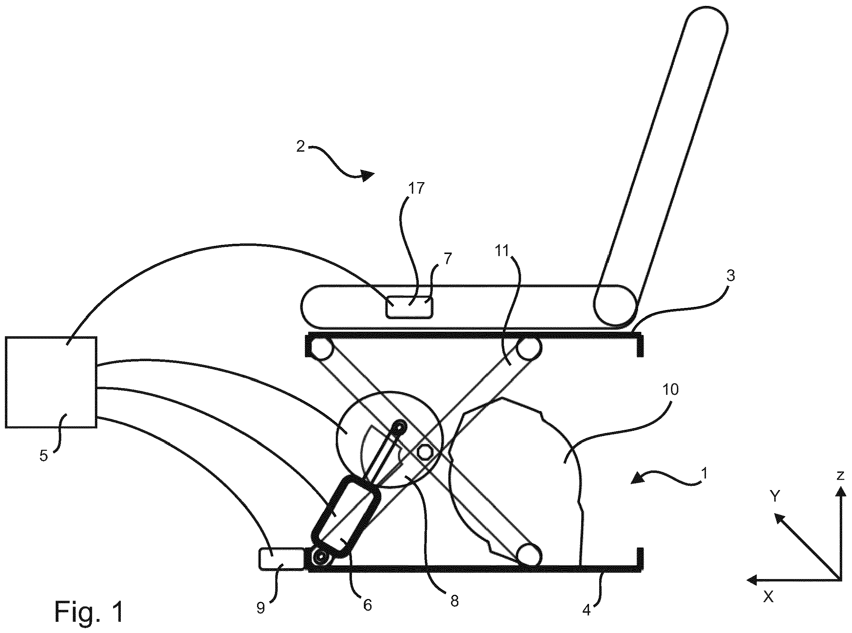

In Fig. 1 ist eine Fahrzeugsitz (2) mit einem regelbaren Dämpfungssystem (1) zum Dämpfen einer Bewegung eines sitzteilseitigen Oberteils (3) relativ zu einem karosserieseitigen Unterteil (4) in wenigstens einer Raumrichtung (X, Y, Z), gemäß einer möglichen Ausführungsform gezeigt. Das Dämpfungssystem umfasst eine zwischen dem sitzteilseitigen Oberteil (3) und dem karosserieseitigen Unterteil (4) angeordnetes durch eine Regeleinrichtung (5) regelbares Dämpfungselement (6).

Zwischen dem sitzteilseitigen Oberteil (3) und dem karosserieseitigen Unterteil (4) sind weiterhin ein Scherengestell (11) und ein Federelement (10) angeordnet. In dieser Ausführungsform ist das Federelement (10) als pneumatisches Federelement ausgeführt. Das Dämpfungselement (6) ist dabei zwischen einem unteren Anlenkpunkt des ersten Scherenarms und dem zweiten Scherenarm angeordnet. An dem unteren Anlenkpunkt kann optional auch ein Beschleunigungssensor (9) angeordnet werden. Die Beschleunigung des sitzteilseitigen Oberteils (3) relativ zu einem karosserieseitigen Unterteil (4) kann dabei aus der Winkelbeschleunigung der Rotation in dem Anlenkpunkt bestimmt werden.

Das Dämpfungssystem (1) umfasst weiterhin eine Dämpfungs-Einstelleinrichtung (7), mit welcher eine Grunddämpfungskraft spezifisch durch einen Nutzer des Sitzes voreinstellbar ist. Die aktuelle Position des sitzteilseitigen Oberteils (3) relativ zu dem karosserieseitigen Unterteil (4) kann durch eine Sensoreinrichtung (8) gemessen werden. In diesem Ausführungsbeispiel ist die Sensoreinrichtung (8) als ein rotierender Höhensensor ausgebildet. Eine Verlagerung des sitzteilseitigen Oberteils (3) relativ zu dem karosserieseitigen Unterteil (4) bewirkt dabei ein Rotation in dem Höhensensor, wobei aus dem Rotationswinkel die Verlagerungsstrecke und somit die Position des sitzteilseitigen Oberteils (3) relativ zu dem karosserieseitigen Unterteil (4) bestimmbar ist.

Die Sensoreinrichtung (8), die Dämpfungs-Einstelleinrichtung (7), und das Dämpfungselement sind mit einer Regeleinrichtung (5) verbunden. Für den Fall, dass die Reglung auf Beschleunigungsdaten des sitzteilseitigen Oberteils (3) basiert, ist selbstverständlich auch der Beschleunigungssensor (9) mit der Regeleinrichtung (5) verbunden.

Das Dämpfungssystem (1) umfasst weiterhin eine Höhen-Einstelleinrichtung (17), mit welcher eine Höhenposition des sitzteilseitigen Oberteils (3) relativ zu dem karosserieseitigen Unterteil (4) einstellbar ist. Die Höhen-Einstelleinrichtung (17) kann beispielsweise weiterhin eine regelbare Pumpe umfassen, welche mit dem pneumatischen Federelement (10) verbunden ist. Die Höheneinstellung würde somit durch das Zu- bzw. Abführen von Luft in oder aus dem pneumatischen Federelement (10) realisiert. Alternativ wären auch zusätzliche Stellglieder denkbar.

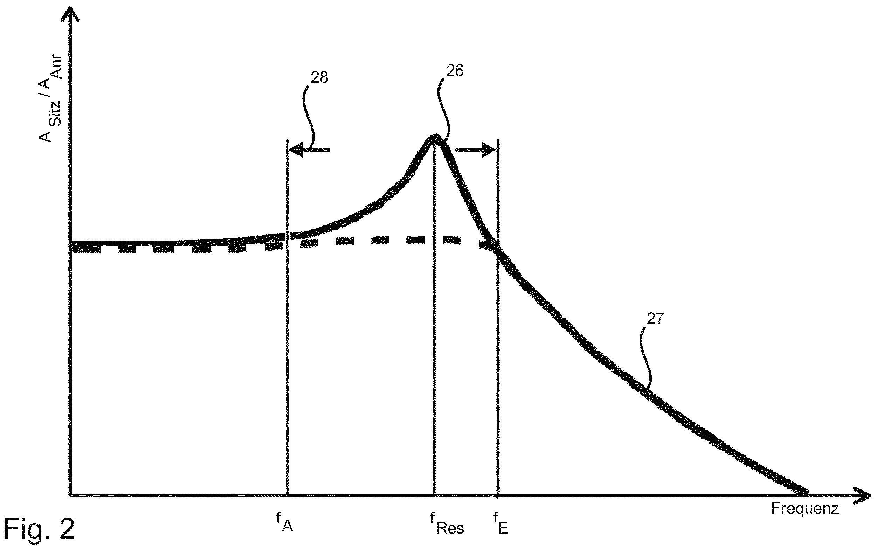

Fig. 2 zeigt das Verhältnis von Schwingungsamplitude des Sitzes (A_{Sitz}) zur Amplitude der Anregung (A_{Anr}) in Abhängigkeit von der Frequenz. Der Graph (26) zeigt einen typischen Verlauf des Verhältnisses der Schwingungsamplitude bei herkömmlichen Sitzdämpfungen in Abhängigkeit von der Frequenz. In einem Frequenzintervall (28), welches sich von einer Anfangsfrequenz (f_{A}) bis zu einer Endfrequenz (f_{E}) erstreckt und die Resonanzfrequenz (f_{Res}) enthält, ist ein Anstieg der Schwingungsamplitude im Bereich zwischen der Anfangsfrequenz (f_{A}) und der Resonanzfrequenz (f_{Res}) erkennbar. Im Bereich zwischen der Resonanzfrequenz (f_{Res}) und der Endfrequenz (f_{E}) sinkt die Schwingungsamplitude wieder ab. Oberhalb der Endfrequenz (f_{E}), welches typischerweise das √2-fachen der Eigenfrequenz des Schwingungssystems ist setzt eine Verminderung der eingeleiteten Schwingungen ein, die mit steigender Erregerfrequenz zunimmt. Dieser Effekt wird auch Schwingungsisolierung genannt.

Das erfindungsgemäße regelbare Dämpfungssystem (1) für einen Fahrzeugsitz (2) zum Dämpfen von Schwingungen eines sitzteilseitigen Oberteils (3) relativ zu einem karosserieseitigen Unterteil (4) in wenigstens einer Raumrichtung (X, Y, Z), ist zum Dämpfen mindestens ein zwischen dem sitzteilseitigen Oberteil (3) und dem karosserieseitigen Unterteil (4) angeordnetes durch eine Regeleinrichtung (5) regelbares Dämpfungselement (6) vorgesehen Ferner zeichnet sich dieses regelbare Dämpfungssystem (1) dadurch aus, dass durch eine Sensoreinrichtung (8) zumindest eine relative Bewegungsgröße und eine Änderung der relativen Bewegungsgröße des sitzteilseitigen Oberteils (3) relativ zu dem karosserieseitigen Unterteil (4) bestimmbar ist und eine erste Dämpfungskraft (25) des Dämpfungselements (6) durch die Regelreinrichtung (5) in Abhängigkeit von der zumindest einen relativen Bewegungsgröße und der Frequenz der Änderung der relativen Bewegungsgröße einstellbar ist.

Die erste Dämpfungskraft (25) des Dämpfungselements (6) durch die Regelreinrichtung (5) kann durch die Regelreinrichtung (5) in Abhängigkeit von einer Geschwindigkeit (V), einer Beschleunigung (B) und Ruck (R) des sitzteilseitigen Oberteils (3) relativ zu dem karosserieseitigen Unterteil (4) eingestellt werden. Die durch die Regelreinrichtung (5) einstellbare erste Dämpfungskraft (25) des Dämpfungselements (6) ist dabei proportional zu der Summe aus einem Geschwindigkeitssummanden, einem Beschleunigungssummanden und einem Rucksummanden, wobei der Geschwindigkeitssummand das Produkt eines ersten frequenzabhängigen Verstärkungsfaktors (K₁(f)) und dem Wert der Geschwindigkeit (V) ist, wobei der Beschleunigungssummand das Produkt eines zweiten frequenzabhängigen Verstärkungsfaktors (K₂(f)) und dem Wert der Beschleunigung (B) ist und wobei der Rucksummand das Produkt eines dritten frequenzabhängigen Verstärkungsfaktors (K₃(f)) und dem Wert des Rucks (R) ist.

Der Graph (27) zeigt den Verlauf des Verhältnisses der Schwingungsamplitude bei dem erfindungsgemäßen regelbaren Dämpfungssystems. In dem Frequenzintervall (28), welches sich von einer Anfangsfrequenz (f_{A}) bis zu einer Endfrequenz (f_{E}) erstreckt und die Resonanzfrequenz (f_{Res}) enthält, ist kein Anstieg der Schwingungsamplitude zu erkennen. Somit ist ein hoher objektiver und subjektiver Fahrkomfort ermöglicht.

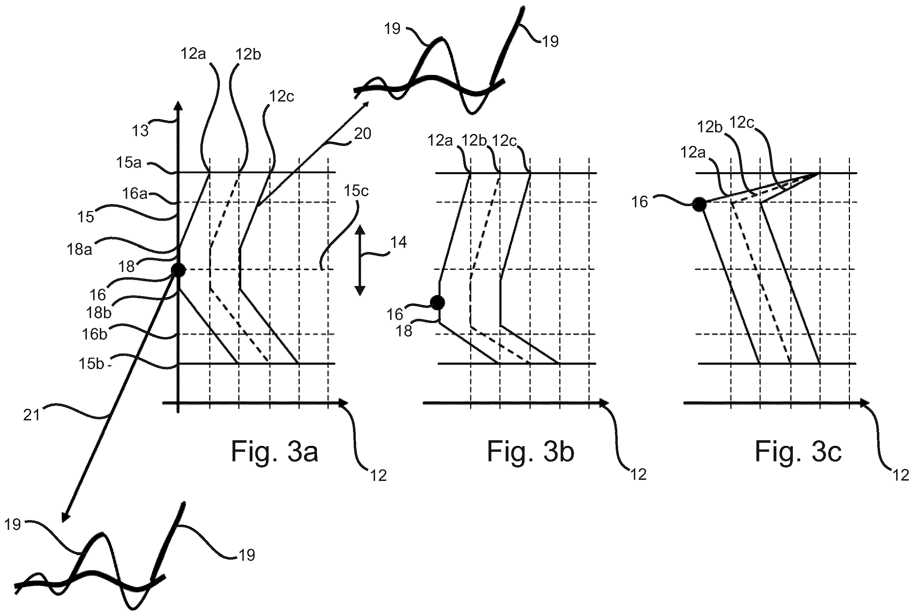

Die Figuren 3a, 3b und 3c zeigen je ein Diagramm der zweiten Dämpfungskraft (12) in Abhängigkeit von der Position (13) des sitzteilseitigen Oberteils (3) relativ zu dem karosserieseitigen Unterteil (4). Die Abszisse beschreibt dabei die zweite Dämpfungskraft (12) und die Ordinate die Position (13) des sitzteilseitigen Oberteils (3) relativ zu dem karosserieseitigen Unterteil (4). Die zweite Dämpfungskraft (12) des Dämpfungselements (6) wird anhand einer durch die Dämpfungs-Einstelleinrichtung (7) voreinstellbaren Grunddämpfungskraft, der durch eine Sensoreinrichtung (8) messbaren Position (13) des sitzteilseitigen Oberteils (3) relativ zu dem karosserieseitigen Unterteil (4) und der Bewegungsrichtung (14) des sitzteilseitigen Oberteils (3) relativ zu dem karosserieseitigen Unterteil (4) durch die Regeleinrichtung (5) eingestellt. Die Bewegungsrichtung (14) wird aus zumindest zwei durch eine Sensoreinrichtung (8) messbaren, zeitlich aufeinanderfolgenden Positionen (13) des sitzteilseitigen Oberteils (3) relativ zu dem karosserieseitigen Unterteil (4) bestimmt.

Die Graphen (12a, 12b, 12c) stellen den Verlauf der zweiten Dämpfungskraft (12) mit unterschiedlich voreingestellter Grunddämpfungskraft dar. Eine maximale Verlagerung der Position (13) des sitzteilseitigen Oberteils (3) relativ zu dem karosserieseitigen Unterteil (4) ist durch einen maximalen Dämpfungsweg (15) des Dämpfungselements (6) gegeben. Der maximale Dämpfungsweg (15) ist dabei durch ein oberes (15a) und ein unteres Dämpfungswegende (15b) begrenzt. Die Höhenposition (16) des sitzteilseitigen Oberteils (3) relativ zu dem karosserieseitigen Unterteil (4), welche durch die Höhen-Einstelleinrichtung (17) einstellbar ist, stellt den Sollwert der Regelung dar. Eine maximal einstellbare Höhenposition (16a) liegt in einem Bereich des Gesamtdämpfungswegs (15), welcher sich zwischen einer Gesamtdämpfungswegmitte (15c) und dem oberen Dämpfungswegende (15a) erstreckt und eine minimal einstellbare Höhenposition (16b) liegt in einem Bereich des Gesamtdämpfungswegs (15), welcher sich zwischen einer Gesamtdämpfungswegmitte (15c) und dem unteren Dämpfungswegende (15a) erstreckt.

In Fig. 3a ist die Höhenposition (16) in der Dämpfungswegmitte (15c) voreingestellt. Bei einer Verlagerung der Position (13) in Richtung zu dem unteren Dämpfungswegende(15b) nimmt die Dämpfungskraft (12) stärker zu als bei einer Verlagerung in Richtung zu dem oberen Dämpfungswegende (15a). Dies hat einen erhöhten Sitzkomfort zur Folge, da ein Anschlag bei einer Bewegung nach unten subjektiv als unangenehmer empfunden wird als ein oberer Endanschlag.

In Fig. 3b ist die Höhenposition (16) zwischen der Gesamtdämpfungswegmitte (15c) und dem unteren Dämpfungswegende (15b) voreingestellt. Eine solche Voreinstellung hat einen stärkeren Anstieg der zweiten Dämpfungskraft (12) bei einer Verlagerung der Position (13) in Richtung zu dem unteren Dämpfungswegende (15b), da weniger Dämpfungsweg zur Verfügung steht.

In Fig. 3c entspricht die voreingestellte Höhenposition (16) der maximalen Höhenposition (16a). In diesem Fall steht weniger Dämpfungsweg in Richtung zu dem oberen Dämpfungswegende (15a) zur Verfügung. Demnach weist die zweite Dämpfungskraft (12) einen stärkeren Anstieg bei einer Verlagerung der Position (13) nach oben in Richtung zu dem oberen Dämpfungswegende (15a) auf.

Der Anstieg der zweiten Dämpfungskraft (12) hinsichtlich einer Bewegungsrichtung des sitzteilseitigen Oberteils (3) relativ zu dem karosserieseitigen Unterteil (4) kann vorteilhafterweise frei durch die Wahl entsprechender Parameter definiert werden. Es wäre beispielsweise auch denkbar eine höhere Bedämpfung beim Ausfedern einzustellen. Eine solche höhere Bedämpfung beim Ausfedern unterstützt die Betätigung der Pedale des Kraftfahrzeugs durch einen Fahrer der sich auf dem Sitz befindet.

Die zweite Dämpfungskraft (12) des Dämpfungselements (6) weist in Abhängigkeit von der Position (13) des sitzteilseitigen Oberteils (3) relativ zu dem karosserieseitigen Unterteil (4) einen Komfortbereich (18) auf, welcher durch eine obere (18a) und eine untere Komfortgrenze (18b) begrenzt ist. In diesem Komfortbereich (18) ist Dämpfungskraft (12) konstant hinsichtlich einer Verlagerung der Position (13) des sitzteilseitigen Oberteils (3) relativ zu dem karosserieseitigen Unterteil (4). Dies ist in den Figuren 3a und 3b zu erkennen. In Figur 3c entspricht die voreingestellte Höhenposition (16) der maximalen voreinstellbaren Höhenposition (16a). In diesem Fall sind die obere (18a) und die untere Komfortgrenze (18b) gleich der Höhenposition (16).

Durch die Regeleinrichtung (5) ist eine dritte Dämpfungskraft (19) des Dämpfungselements (6) einstellbar. Diese dritte Dämpfungskraft (19) ist anhand des Gesamtdämpfungswegs (15), der voreinstellbaren Grunddämpfungskraft, der Position (13) des sitzteilseitigen Oberteils (3) relativ zu dem karosserieseitigen Unterteil (4), der Bewegungsrichtung (14), dem Betrag der Geschwindigkeit und eines Restdämpfungswegs des sitzteilseitigen Oberteils (3) relativ zu dem karosserieseitigen Unterteil (4) bestimmbar. Der Restdämpfungsweg ist aus dem maximalen Dämpfungsweg (15) und der Position (13) des sitzteilseitigen Oberteils (3) relativ zu dem karosserieseitigen Unterteil (4) bestimmbar und, die Geschwindigkeit aus zumindest zwei zeitlich aufeinanderfolgenden Positionen (13) des sitzteilseitigen Oberteils (3) relativ zu dem karosserieseitigen Unterteil (4).

In einem Frequenzbereich außerhalb des Frequenzintervalls (28), welches sich von einer Anfangsfrequenz (f_{A}) bis zu einer Endfrequenz (f_{E}) erstreckt und die Resonanzfrequenz (f_{Res}) enthält ist die Gesamtdämpfungskraft des Dämpfungselements (5) durch die Summe von zweiter (12) und dritter Dämpfungskraft (19) gegeben. Die dritte Dämpfungskraft (19) kann der zweiten Dämpfungskraft (12) gleichgerichtet überlagert werden. Dies ist beispielsweise notwendig wenn nur wenig Restdämpfungsweg zur Verfügung (Position (20) in Fig. 3a) steht. Ein Endanschlag kann somit effektiv vorgebeugt werden. Bei Auftreten eines plötzlichen Stoßes kann die dritte Dämpfungskraft (19) der zweiten Dämpfungskraft (12) entgegengerichtet sein, so dass die Gesamtdämpfungskraft weicher geschaltet wird. Dies ist lediglich sinnvoll wenn ausreichend Restdämpfungsweg vorhanden ist (Position (21)). Somit wird das sitzteilseitige Oberteil möglichst gering ausgelenkt.

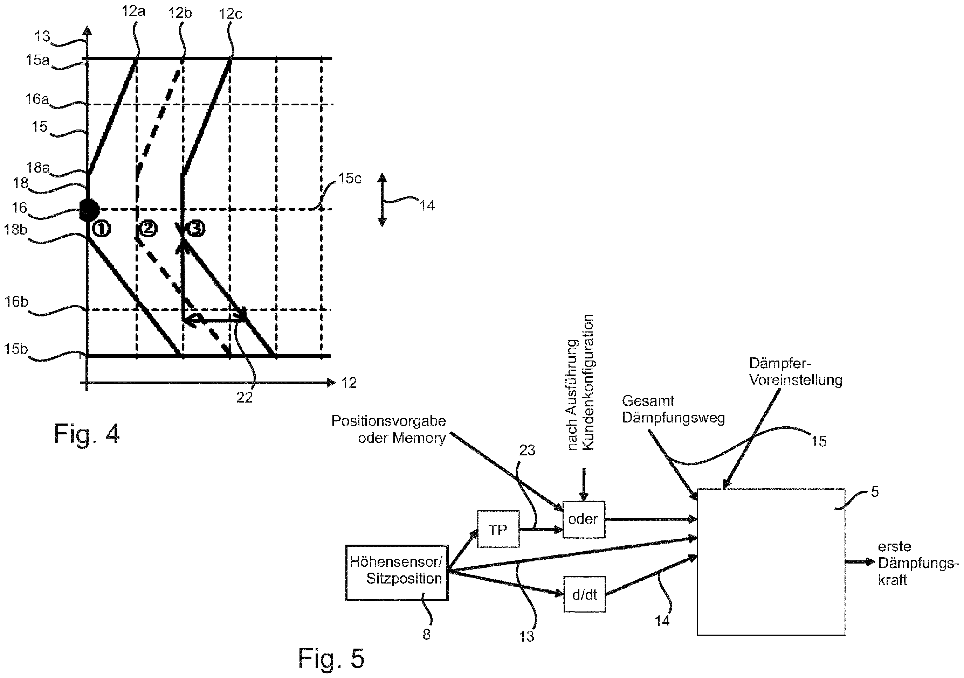

In Fig. 4 ist ein Diagramm analog zu Fig. 3a dargestellt. Darüber hinaus zeigt das Diagramm einen alternativen Rückverlagerungsweg (22) der Position (13) des sitzteilseitigen Oberteils (3). Bei diesem Rückverlagerungsweg (22) ist nur die positionsunabhängige voreingestellte Grunddämpfungskraft wirksam. Eine solche Ausführung hat eine weichere und/oder schnellere Rückführung des sitzteilseitigen Oberteils (3) zur Folge. Gleichzeitig wird das sitzteilseitige Oberteil (3) in seiner Höhe stabilisiert, da dieses weicher in die Ausgangslage zurückfedert.

Fig. 5 zeigt eine Algorithmus-Struktur zur Bestimmung der zweiten Dämpfungskraft (12) des Dämpfungselements (6) durch die Regelungsreinrichtung (5). Die Position (13) des sitzteilseitigen Oberteils (3) relativ zu dem karosserieseitigen Unterteil (4) wird durch die Sensoreinrichtung (8) gemessen und der Regelungsreinrichtung (5) zugeführt. Weiterhin wird eine gemittelte Position durch einen Tiefpass- oder Mittelwertbildungsfilter (TP) ermittelt und an die Regelungsreinrichtung (5) übergeben. Dieser Wert stellt den Sollwert der Regelung dar. Ebenso könnte eine Positionsvorgabe aus einem Speicher oder anderweitig vorgegeben werden. Ebenso wird die Bewegungsrichtung (14) der Position (13) der Regeleinrichtung (5) zugeführt. Weiterhin wird die zweite Dämpfungskraft (12) anhand einer durch eine Dämpfungs-Einstelleinrichtung (7) voreinstellbaren Grunddämpfungskraft (12) und dem Gesamtdämpfungsweg(15) bestimmt. Die Berechnung der ersten Dämpfungskraft erfolgt dabei anhand einer Kennlinie oder einer Look-Up-Tabelle.

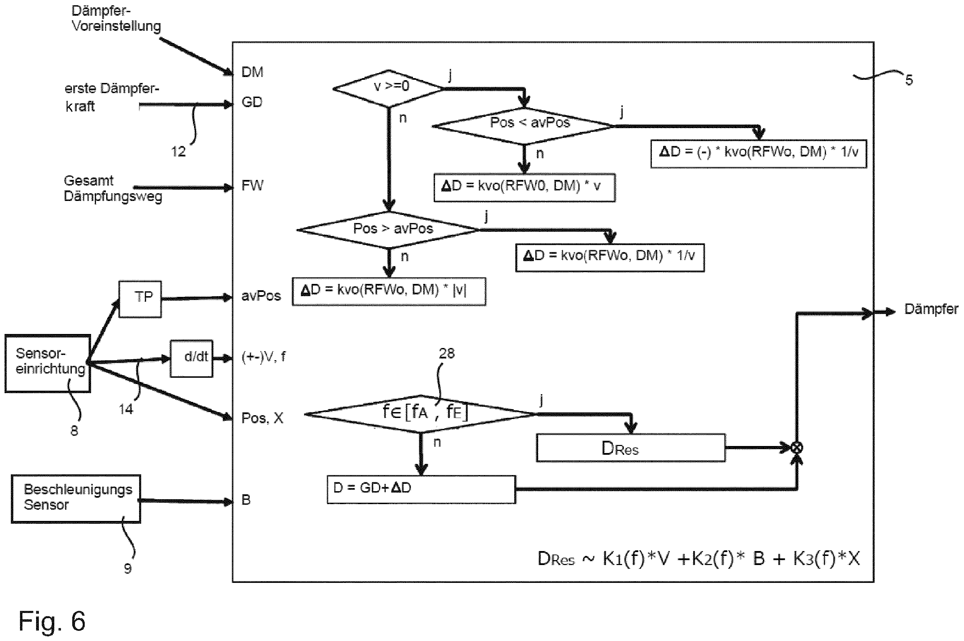

In Fig. 6 wird eine Algorithmus-Struktur zur Bestimmung der Gesamtdämpfungskraft D des Dämpfungselements (6) durch die Regelreinrichtung (5) dargestellt. Der Regeleinrichtung (5) werden folgende Parameter zugeführt: die Position (13) des sitzteilseitigen Oberteils (3) relativ zu dem karosserieseitigen Unterteil (4) gemessen durch die Sensoreinrichtung (8), durch die Dämpfungs-Einstelleinrichtung (7) voreinstellbare Grunddämpfungskraft (DM), eine gemittelte Position (avPos) durch einen Tiefpass- oder Mittelwertbildungsfilter (TP) ermittelt, Gesamtdämpfungsweg (FW), die zweite Dämpfungskraft (12, GD), die Bewegungsrichtung (14) und die Geschwindigkeit (V) des sitzteilseitigen Oberteils (3) relativ zu dem karosserieseitigen Unterteil (4). Ferner wird der Parameter der Frequenz (f) der Geschwindigkeitsänderungen dem Algorithmus zugeführt. Die gemessenen zeitabhängigen Werte können beispielsweise durch eine Fourier-Transformation in ein Frequenzspektrum überführt werden. Weiterhin können auch die Werte (B) eines Beschleunigungssensors (9) mit einbezogen werden.

Die dritte Dämpfungskraft (19, ΔD) wird gebildet aus einem ersten Parameter (kvo), welcher eine Funktion des Restdämpfungswegs (RFWo) und der voreinstellbaren Grunddämpfungskraft (DM) ist, und einem Geschwindigkeitsfaktor Vⁿ (n = +- 1). Für den Fall, V >= 0 wird bei einer aktuellen Position (13, Pos), welche größer als die gemittelte Position (avPos) ist, der erste Parameter (kvo) mit dem Betrag der Geschwindigkeit (|V|) multipliziert. Im umgekehrten Fall wird der erste Parameter (kvo) mit der reziproken Geschwindigkeit (1/V) multipliziert. Für den Fall, V< 0 wird bei einer aktuellen Position (13, Pos), welche größer als die gemittelte Position (avPos) ist, der erste Parameter (kvo) mit der reziproken Geschwindigkeit multipliziert (1/V) und im umgekehrten Fall mit dem Betrag der Geschwindigkeit (|V|).

Für Frequenzen (f), welche außerhalb des Frequenzintervalls (28), welches sich von einer Anfangsfrequenz (f_{A}) bis zu einer Endfrequenz (f_{E}) erstreckt und die Resonanzfrequenz (f_{Res}) enthält bildet sich die Gesamtdämpfungskraft (D) sich aus der Summe der zweiten Dämpfungskraft (12, GD) und der dritten Dämpfungskraft (19, ΔD)

Für Frequenzen (f) innerhalb des Frequenzintervalls (28) wird die erste Dämpfungskraft (25 D_{Res}) an dem Dämpfungselement eingestellt. die erste Dämpfungskraft (25, D_{Res}) ist proportional zu der Summe aus einem Geschwindigkeitssummanden, einem Beschleunigungssummanden und einem Rucksummanden ist, wobei der Geschwindigkeitssummand das Produkt eines ersten frequenzabhängigen Verstärkungsfaktors (K₁(f)) und dem Wert der Geschwindigkeit (V) ist, wobei der Beschleunigungssummand das Produkt eines zweiten frequenzabhängigen Verstärkungsfaktors (K₂(f)) und dem Wert der Beschleunigung (B) ist und wobei der Rucksummand das Produkt eines dritten frequenzabhängigen Verstärkungsfaktors (K₃(f)) und dem Wert des Rucks (R) ist.

Der zweite Verstärkungsfaktor (K₂(f)) steigt linear mit der Frequenz und der dritte Verstärkungsfaktor (K₃(f)) steigt quadratisch mit der Frequenz. Ferner ist der zeitliche Verlauf der Beschleunigung um 90° und der zeitliche Verlauf des Rucks um 180° phasenverschoben bezüglich des zeitlichen Verlaufs der Geschwindigkeit.

Der durch die Sensoreinrichtung (8) gemessene Frequenzbereich weist eine Resonanzfrequenz auf. In dem Frequenzintervall (28), welches sich von einer Anfangsfrequenz (f_{A}) bis zu der Resonanzfrequenz (f_{Res}) erstreckt, der Wert des Beschleunigungssummanden und des Wegsummand an, wodurch die erste Dämpfungskraft (25, D_{Res}) ansteigt. Dieser vorteilhafte Anstieg ist darin begründet, dass der zweite (K₂(f)) und dritte Verstärkungsfaktor (K₃(f)) linear bzw. quadratisch mit der Frequenz ansteigen. In dem Frequenzbereich, welcher sich von der Resonanzfrequenz (f_{Res}) bis zu einer Endfrequenz (f_{E}) erstreckt dominiert der Wegsummand wodurch die erste Dämpfungskraft (25, D_{Res}) absinkt. Der Rucksummand dominiert durch die quadratische Frequenzabhängigkeit des dritten Verstärkungsfaktors (K₃(f)). Aufgrund des gegenphasigen Verhaltens der Geschwindigkeit und des Rucks sinkt die erste Dämpfungskraft des Dämpfungselements ab. Somit ist ein hoher objektiver und subjektiver Fahrkomfort sowohl bei nieder- als auch bei hochfrequenten Anregungen ermöglicht. Demnach kann vorteilhaft durch die Festlegung der entsprechenden Verstärkungsparameter der Einfluss jedes Summanden auf die Summe und somit auf die Stärke der ersten Dämpfungskraft (25, D_{Res}) definiert werden. Die durch Einwirkung einzelner Summanden signifikant erhöhte Kraft des Dämpfers kann den unerwünschten Anstieg der Schwingungsamplituden im Bereich der Resonanzfrequenz erheblich reduzieren.

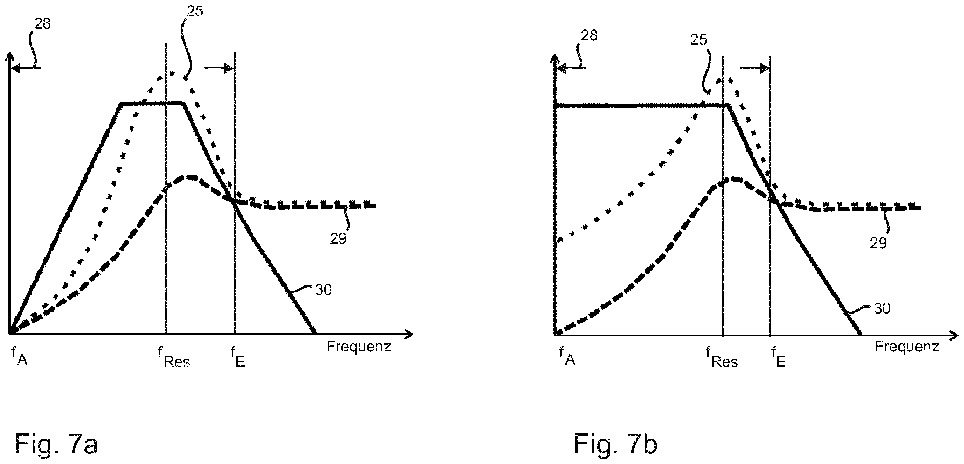

Das oben beschriebene Verhalten der ersten Dämpfungskraft (25, D_{Res}) ist in den Fig. 7a, 7b ersichtlich. In den Diagrammen ist weiterhin ein Verlauf (29) einer Dämpfungskraft herkömmlicher Sitzdämpfungen und ein Ansteuersignal (30) für das Dämpfelement eingezeichnet. In dem Diagramm der Fig. 7b tragen alle oben genannten Summanden zur Dämpfungskraft bei. Das Diagramm in Fig. 7b zeigt einen Verlauf der ersten Dämpfungskraft (25, D_{Res}), bei welchem der Wegsummand nicht berücksichtigt wurde.

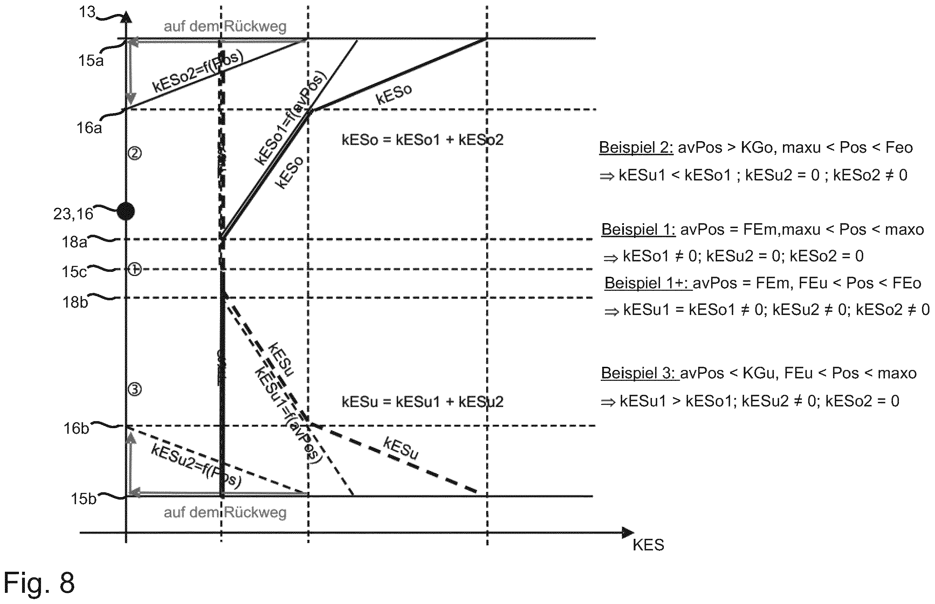

In Fig. 8 ein Diagramm der Dämpfungskraft in Abhängigkeit von der Position des sitzteilseitigen Oberteils relativ zu dem karosserieseitigen Unterteil gemäß einer weiteren Ausführungsform. In dem Diagramm beschreibt die Abszisse den dritten Parameter kES dar und die Ordinate die Position (13) des sitzteilseitigen Oberteils (3) relativ zu dem karosserieseitigen Unterteil (4). Gemäß dieser Ausführungsform gilt für die Dämpfungskraft D = kES·Vⁿ. Der dritte Parameter kES ist eine Funktion von: oberes Dämpfungswegende (15a, FEo), unteres Dämpfungswegende (15b, FEu), Dämpfungswegmitte (15c, FEm), maximale Höhenposition (16a, maxo), minimale Höhenposition (16b, minu), obere Komfortgrenze (18a, KGo), untere Komfortgrenze (18b, KGu), gemittelte Position (23, avPos), aktuelle Position (13, Pos), voreingestellte Grunddämpfungskraft (DM) und der Bewegungsrichtung (14, sgn(V)). Der Exponent n ist im Bereich zwischen 0...∞. Bei n=0 ist D unabhängig vom Betrag der Geschwindigkeit und entspricht der ersten Dämpfungskraft. Bei 0<n<1 weist das Dämpfungssystem (1) eine degressive Charakteristik auf und bei n>=1 eine progressive Charakteristik. Bei einem festgelegten Exponenten n bestimmt der dritte Parameter kES die Charakteristik der Dämpfungskraft. Für V>=0 gilt: kES = kESo und für V<0 gilt: kES = kESu. Der dritte Parameter kES setzt sich aus zwei Bestandteilen zusammen: kES=kES1+kES2 (kESo=kESo1+ kESo2, kESu=kESu1 + kESu2), wobei kES2 lediglich bei einer Position in einem Bereich zwischen der maximale Höhenposition (16a, maxo) und dem oberen Dämpfungswegende (15a, FEo) und in einem Bereich zwischen minimaler Höhenposition (16b, maxu) und unterem Dämpfungswegende (15b, FEu) ungleich 0 ist. Überschreitet die aktuelle Position (13, Pos) des sitzteilseitigen Oberteils (3) die maximale Höhenposition (16a, maxo) bzw. die minimale Höhenposition (16b, maxu) wird kES in Folge der kES2-Anteile höher. Die Dämpfungskraft wird somit um einen Endanschlagschutzfaktor kES2 erhöht, wodurch ein Endanschlag des sitzteilseitigen Oberteils (3) effektiv vermieden werden kann. Um den Komfort zu erhöhen sollte das sitzteilseitige Oberteil (3) möglichst schnell in die gemittelte Position (23) bzw. auf den Sollwert der Regelung zurückgeführt werden. Demnach wird bei der Rückbewegung der kES2-Anteil auf 0 gesetzt.

### Bezugszeichenliste

- 1: Regelbares Dämpfungssystem
- 2: Fahrzeugsitz
- 3: sitzteilseitiges Oberteil
- 4: karosserieseitiges Unterteil
- 5: Regelreinrichtung
- 6: Dämpfungselement
- 7: Dämpfungs-Einstelleinrichtung
- 8: Sensoreinrichtung
- 9: Beschleunigungssensor
- 10: Federelement
- 11: Scherengestell
- 12: zweite Dämpfungskraft
- 12a: zweite Dämpfungskraft in Abhängigkeit von einer ersten voreinstellbaren Grunddämpfungskraft
- 12b: zweite Dämpfungskraft in Abhängigkeit von einer zweiten voreinstellbaren Grunddämpfungskraft
- 12c: zweite Dämpfungskraft in Abhängigkeit von einer dritten voreinstellbaren Grunddämpfungskraft
- 13: Position des sitzteilseitigen Oberteils
- 14: Bewegungsrichtung
- 15: maximaler Dämpfungsweg
- 15a: oberes Dämpfungswegende
- 15b: unteres Dämpfungswegende
- 15c: Gesamtdämpfungswegmitte
- 16: Höhenposition
- 16a: maximale Höhenposition
- 16b: minimale Höhenposition
- 17: Höhen-Einstelleinrichtung
- 18: Komfortbereich
- 18a: obere Komfortgrenze
- 18b: untere Komfortgrenze
- 19: Dritte Dämpfungskraft
- 20: Position sitzteilseitiges Oberteil relativ karosserieseitiges Unterteil
- 21: Position sitzteilseitiges Oberteil relativ karosserieseitiges Unterteil
- 22: Rückverlagerungsweg
- 23: Gemittelte Position
- 24a: Beispielposition 1
- 24b: Beispielposition 2
- 24c: Beispielposition 3
- 25: erste Dämpfungskraft
- 26: Verlauf des Verhältnisses der Schwingungsamplituden bei herkömmlichen Sitzdämpfungen
- 27: Verlauf des Verhältnisses der Schwingungsamplituden bei erfindungsgemäßer Sitzdämpfung
- 28: Frequenzintervall
- 29: Verlauf einer Dämpfungskraft herkömmlicher Sitzdämpfungen
- 30: Ansteuersignal
- avPos: gemittelte Position des sitzteilseitiges Oberteil relativ karosserieseitiges Unterteil
- A_{Sitz}: Schwingungsamplitude Sitz
- A_{Anr}: Schwingungsamplitude Anregung
- avPos: gemittelte position des sitzteilseitigen Oberteils relativ zu karosserieseitigen Unterteil
- B: Beschleunigung
- D: Gesamtdämpfungskraft
- D_{Res}: erste Dämpfungskraft
- ΔD: dritte Dämpfungskraft
- DM: voreinstellbare Grunddämpfungskraft
- f: Frequenz
- f_{A}: Anfangsfrequenz
- f_{Res}: Resonanzfrequenz
- f_{E}: Endfrequenz
- FW: Gesamtdämpfungsweg
- FEo: oberes Dämpfungswegende
- FEu: unteres Dämpfungswegende
- FEm: Dämpfungswegmitte
- GD: zweite Dämpfungskraft
- K₁(f): erster Verstärkungsfaktor
- K₂(f): zweiter Verstärkungsfaktor
- K₃(f): dritter Verstärkungfaktor
- kvo: erster Parameter
- kRFr: zweiter Parameter
- kES: dritter Parameter
- kES2: Endanschlagschutzfaktor
- KGo: obere Komfortgrenze
- KGu: untere Komfortgrenze
- maxo: maximale Höhenposition
- maxu: minimale Höhenposition
- Pos: Position des sitzteilseitiges Oberteil relativ karosserieseitiges Unterteil
- R: Ruck
- RFWo: Restdämpfungsweg
- TP: Tiefpass- oder Mittelwertbildungsfilter
- V: Geschwindigkeit
- X, Y, Z: Raumrichtungen

## Patentansprüche

1. Regelbares Dämpfungssystem (1) für einen Fahrzeugsitz (2) zum Dämpfen von Schwingungen eines sitzteilseitigen Oberteils (3) relativ zu einem karosserieseitigen Unterteil (4) in wenigstens einer Raumrichtung (X, Y, Z), wobei das regelbare Dämpfungssystem eine Regeleinrichtung (5), ein Dämpfungselement (6) und eine Sensoreinrichtung (8) umfasst, wobei zum Dämpfen mindestens das zwischen dem sitzteilseitigen Oberteil (3) und dem karosserieseitigen Unterteil (4) angeordnetes und durch die Regelreinrichtung (5) regelbares Dämpfungselement (6) vorgesehen ist,
**dadurch gekennzeichnet, dass**
durch die Sensoreinrichtung (8) zumindest eine relative Bewegungsgröße und eine Änderung der relativen Bewegungsgröße des sitzteilseitigen Oberteils (3) relativ zu dem karosserieseitigen Unterteil (4) bestimmbar ist und eine erste Dämpfungskraft (25) des Dämpfungselements (6) durch die Regelreinrichtung (5) in Abhängigkeit von der zumindest einen relativen Bewegungsgröße und einer Frequenz der Änderung der relativen Bewegungsgröße einstellbar ist,
wobei die erste Dämpfungskraft (25) des Dämpfungselements (6) durch die Regelreinrichtung (5) in Abhängigkeit von einer Geschwindigkeit (V), einer Beschleunigung (B) und einem Ruck (R) des sitzteilseitigen Oberteils (3) relativ zu dem karosserieseitigen Unterteil (4) einstellbar ist.

2. Regelbares Dämpfungssystem (1) nach Anspruch 1,
**dadurch gekennzeichnet, dass**
die durch die Regelreinrichtung (5) einstellbare erste Dämpfungskraft (25) des Dämpfungselements (6) proportional zu der Summe aus einem Geschwindigkeitssummanden, einem Beschleunigungssummanden und einem Rucksummanden ist, wobei der Geschwindigkeitssummand das Produkt eines ersten frequenzabhängigen Verstärkungsfaktors (K1(f)) und dem Wert der Geschwindigkeit (V) ist, wobei der Beschleunigungssummand das Produkt eines zweiten frequenzabhängigen Verstärkungsfaktors (K2(f)) und dem Wert der Beschleunigung (B) ist und wobei der Rucksummand das Produkt eines dritten frequenzabhängigen Verstärkungsfaktors (K3(f)) und dem Wert des Rucks (R) ist.

3. Regelbares Dämpfungssystem (1) nach Anspruch 2,
**dadurch gekennzeichnet, dass**
der durch die Sensoreinrichtung (8) gemessene Frequenzbereich zumindest eine Resonanzfrequenz (fRes) aufweist, wobei in einem Frequenzintervall (28), welches sich von einer Anfangsfrequenz (fA) bis zu der Resonanzfrequenz (fRes) erstreckt, der Wert des Beschleunigungssummanden und des Rucksummanden ansteigen, wodurch die erste Dämpfungskraft (25) des Dämpfungselements (6) ansteigt, wobei in einem Frequenzintervall (28), welches sich von der Resonanzfrequenz (fRes) bis zu einer Endfrequenz (fE) erstreckt der Rucksummand dominiert wodurch die erste Dämpfungskraft (25) des Dämpfungselements (6) absinkt.

4. Regelbares Dämpfungssystem (1) nach einem der vorhergehenden Ansprüche,
**dadurch gekennzeichnet, dass**
eine zweite Dämpfungskraft (12) des Dämpfungselements (6) durch die Regelreinrichtung (5) einstellbar ist, wobei diese zweite Dämpfungskraft (12) durch die Regeleinrichtung (5), anhand eines Gesamtdämpfungswegs (15) des Dämpfungselements (6), einer durch eine Dämpfungs-Einstelleinrichtung (7) voreinstellbaren Grunddämpfungskraft, einer durch eine Sensoreinrichtung (8) messbaren Position (13) des sitzteilseitigen Oberteils (3) relativ zu dem karosserieseitigen Unterteil (4) und einer Bewegungsrichtung (14) des sitzteilseitigen Oberteils (3) relativ zu dem karosserieseitigen Unterteil (4), bestimmbar ist, wobei die Bewegungsrichtung (14) aus zumindest zwei durch die Sensoreinrichtung (8) messbaren, zeitlich aufeinanderfolgenden Positionen (13) des sitzteilseitigen Oberteils (3) relativ zu dem karosserieseitigen Unterteil (4) bestimmbar ist.

5. Regelbares Dämpfungssystem (1) nach Anspruch 4,
**dadurch gekennzeichnet, dass**
eine maximale Verlagerung der Position (13) des sitzteilseitigen Oberteils (3) relativ zu dem karosserieseitigen Unterteil (4) durch den Gesamtdämpfungsweg (15) des Dämpfungselements (6) gegeben ist, welcher durch ein oberes (15a) und ein unteres Dämpfungswegende (15b) begrenzt ist, und eine den Sollwert der Regelung darstellende Höhenposition (16) des sitzteilseitigen Oberteils (3) relativ zu dem karosserieseitigen Unterteil (4) durch eine Höhen-Einstelleinrichtung (17) einstellbar ist, wobei eine maximal einstellbare Höhenposition (16a) in einem Bereich des Gesamtdämpfungswegs (15) liegt, welcher sich zwischen einer Gesamtdämpfungswegmitte (15c) und dem oberen Dämpfungswegende (15a) erstreckt und wobei eine minimal einstellbare Höhenposition (16b) in einem Bereich des Gesamtdämpfungswegs (15) liegt, welcher sich zwischen einer Gesamtdämpfungswegmitte (15c) und dem unteren Dämpfungswegende (15a) erstreckt.

6. Regelbares Dämpfungssystem (1) nach Anspruch 5,
**dadurch gekennzeichnet, dass**
bei einer Verlagerung der Position (13) des sitzteilseitigen Oberteils (3) ausgehend von der Höhenposition (16), die durch die Regeleinrichtung (5) einstellbare zweite Dämpfungskraft (12) des Dämpfungselements (6) innerhalb eines Komfortbereichs (18) des Gesamtdämpfungswegs (15) kleiner ist als außerhalb des Komfortbereichs(18), wobei der Komfortbereich (18) durch eine obere (18a) und eine untere Komfortgrenze (18b) begrenzt ist, wobei der Komfortbereich (18) ein Teilbereich des Bereichs des Gesamtdämpfungswegs (15) ist, welcher durch die maximal einstellbare Höhenposition (16a) und die minimal einstellbare Höhenposition (16b) begrenzt ist, wobei zweite Dämpfungskraft (12) innerhalb des Komfortbereichs (18) konstant oder mit dem Abstand zwischen der Position des sitzteilseitigen Oberteils und der Höhenposition ansteigend oder fallend ist, wobei bei einer Verlagerung der Position (13) des sitzteilseitigen Oberteils (3) ausgehend von der maximalen (16a) oder der minimalen Höhenposition (16b) der Komfortbereich (18) auf die maximale (16a) beziehungsweise die minimale Höhenposition (16b) beschränkt ist.

7. Regelbares Dämpfungssystem (1) nach einem der Ansprüche 5 oder 6,
**dadurch gekennzeichnet, dass**
bei einer Verlagerung der Position (13) des sitzteilseitigen Oberteils (3), ausgehend von der Höhenposition (16), die durch die Regeleinrichtung (5) einstellbare zweite Dämpfungskraft (12) des Dämpfungselements (6), außerhalb des Komfortbereichs (18), des Gesamtdämpfungswegs (15) linear mit dem Abstand zwischen der Position (13) des sitzteilseitigen Oberteils (3) und der Höhenposition (16) anwächst.

8. Regelbares Dämpfungssystem (1) nach einem der vorhergehenden Ansprüche,
**dadurch gekennzeichnet, dass**
bei einer Verlagerung der Position (13) des sitzteilseitigen Oberteils (3), in Richtung zu der Höhenposition (16), durch die Regeleinrichtung (5) eine Dämpfungskraft des Dämpfungselements (6) einstellbar ist, welche lediglich der voreingestellten Grunddämpfungskraft entspricht.

9. Regelbares Dämpfungssystem (1) nach einem der vorhergehenden Ansprüche,
**dadurch gekennzeichnet, dass**
durch die Regeleinrichtung (5) eine dritte Dämpfungskraft (19) des Dämpfungselements (6) einstellbar ist, wobei diese dritte Dämpfungskraft (19) anhand des Gesamtdämpfungswegs (15), der voreinstellbaren Grunddämpfungskraft, der Position (13) des sitzteilseitigen Oberteils (3) relativ zu dem karosserieseitigen Unterteil (4), der Bewegungsrichtung (14), dem Betrag der Geschwindigkeit und eines Restdämpfungswegs des sitzteilseitigen Oberteils (3) relativ zu dem karosserieseitigen Unterteil (4) bestimmbar ist, wobei der Restdämpfungsweg aus dem Gesamtdämpfungsweg (15) und der Position (13) des sitzteilseitigen Oberteils (3) relativ zu dem karosserieseitigen Unterteil (4) bestimmbar ist, wobei die Geschwindigkeit aus zumindest zwei zeitlich aufeinanderfolgenden Positionen (13) des sitzteilseitigen Oberteils (3) relativ zu dem karosserieseitigen Unterteil (4) bestimmbar ist.

10. Regelbares Dämpfungssystem (1) nach Anspruch 9,
**dadurch gekennzeichnet, dass**
der durch die Sensoreinrichtung (8) gemessene Frequenzbereich zumindest eine Resonanzfrequenz aufweist, wobei in einem Frequenzintervall, welches sich von einer Anfangsfrequenz bis zu der Endfrequenz erstreckt und die Resonanzfrequenz enthält, die Gesamtdämpfungskraft des Dämpfungselements (5) der ersten Dämpfungskraft entspricht und wobei außerhalb dieses Frequenzintervalls die Gesamtdämpfungskraft des Dämpfungselements (5) aus der Summe von zweiter (12) und dritter Dämpfungskraft (19) gegeben ist.

11. Regelbares Dämpfungssystem (1) nach einem der vorhergehenden Ansprüche,
**dadurch gekennzeichnet, dass**
bei einer Verlagerung der Position (13) des sitzteilseitigen Oberteils (3), ausgehend von der maximalen Höhenposition (16a) in Richtung des oberen Dämpfungswegendes (15a) oder bei einer Verlagerung der Position (13) des sitzteilseitigen Oberteils (3), ausgehend von der minimalen Höhenposition (16b) in Richtung des unteren Dämpfungswegendes (15b) durch die Regeleinrichtung (5) eine Dämpfungskraft des Dämpfungselements (6) einstellbar, welche um einen Endanschlagschutzfaktor erhöht ist, wobei bei einer Verlagerung der Position (13) des sitzteilseitigen Oberteils (3) in entgegengesetzter Richtung durch die Regeleinrichtung (5) eine Dämpfungskraft des Dämpfungselements ohne Endanschlagschutzfaktor einstellbar ist.

12. Fahrzeugsitz (2) mit einem regelbaren Dämpfungssystem (1) nach einem der vorhergehenden Ansprüche.

13. Verfahren zum Regeln eines regelbaren Dämpfungssystems (1) für einen Fahrzeugsitz (2) zum Dämpfen von Schwingungen eines sitzteilseitigen Oberteils (3) relativ zu einem karosserieseitigen Unterteil (4) in wenigstens einer Raumrichtung (X, Y, Z), wobei zum Dämpfen mindestens ein zwischen dem sitzteilseitigen Oberteil (3) und dem karosserieseitigen Unterteil (4) angeordnetes durch eine Regeleinrichtung (5) regelbares Dämpfungselement (6) vorgesehen ist, wobei das Verfahren folgende Schritte umfasst:
Bestimmen zumindest einer relativen Bewegungsgröße und einer Änderung der relativen Bewegungsgröße des sitzteilseitigen Oberteils (3) relativ zu dem karosserieseitigen Unterteil (4) durch eine Sensoreinrichtung (8); Einstellen einer ersten Dämpfungskraft (25) des Dämpfungselements (6) durch die Regeleinrichtung (5), wobei die erste Dämpfungskraft (25) durch die Regeleinrichtung (5) in Abhängigkeit von der zumindest einen relativen Bewegungsgröße und einer Frequenz der Änderung der relativen Bewegungsgröße bestimmt wird, wobei die erste Dämpfungskraft (25) des Dämpfungselements (6) durch die Regelreinrichtung (5) in Abhängigkeit von einer Geschwindigkeit (V), einer Beschleunigung (B) und einem Ruck (R) des sitzteilseitigen Oberteils (3) relativ zu dem karosserieseitigen Unterteil (4) eingestellt wird.

## Claims

1. Adjustable damping system (1) for a vehicle seat (2) for damping vibrations of a seat-part-side upper part (3) relative to a body-side lower part (4) in at least one spatial direction (X, Y, Z), wherein the adjustable damping system comprises an adjustment device (5), a damping element (6) and a sensor device (8), wherein at least the damping element (6), arranged between the seat-part-side upper part (3) and the body-side lower part (4) and adjustable by the adjustment device (5), is provided for the damping, **characterised in that**
at least one relative movement variable and a change in the relative movement variable of the seat-part-side upper part (3) relative to the body-side lower part (4) can be determined by the sensor device (8), and a first damping force (25) of the damping element (6) can be adjusted by the adjustment device (5) as a function of the at least one relative movement variable and a frequency of the change in the relative movement variable, wherein the first damping force (25) of the damping element (6) is adjustable by the adjustment device (5) as a function of a speed (V), an acceleration (B) and the jerk (R) of the seat-part-side upper part (3) relative to the body-side lower part (4).

2. Adjustable damping system (1) according to claim 1,
**characterised in that**
the first damping force (25), adjustable by the adjustment device (5), of the damping element (6) is proportional to the sum of a speed summand, an acceleration summand and a jerk summand, the speed summand being the product of a first frequency-dependent amplification factor (K₁(f)) and the value of the speed (V), the acceleration summand being the product of a second frequency-dependent amplification factor (K₂(f)) and the value of the acceleration (B), and the jerk summand being the product of a third frequency-dependent amplification factor (K₃(f)) and the value of the jerk (R).

3. Adjustable damping system (1) according to claim 2,
**characterised in that**
the frequency range measured by the sensor device (8) comprises at least one resonant frequency (f_{Res}), in a frequency interval (28) extending from an initial frequency (f_{A}) to the resonant frequency (f_{Res}) the value of the acceleration summand and of the jerk summand increasing, causing the first damping force (25) of the damping element (6) to increase, in a frequency interval (28) extending from the resonant frequency (f_{Res}) to an end frequency (f_{E}) the jerk summand being dominant, causing the first damping force (25) of the damping element (6) to decrease.

4. Adjustable damping system (1) according to any of the preceding claims,
**characterised in that**
a second damping force (12) of the damping element (6) can be adjusted by the adjustment device (5), it being possible for this second damping force (12) to be determined by the adjustment device (5) by way of a total damping travel (15) of the damping element (6), a basic damping force presettable by way of a damping setting device (7), a position (13), measurable by a sensor device (8), of the seat-part-side upper part (3) relative to the body-side lower part (4), and a movement direction (14) of the seat-part-side upper part (3) relative to the body-side lower part (4), it being possible for the movement direction (14) to be determined from at least two temporally successive positions (13), measurable by the sensor device (8), of the seat-part-side upper part (3) relative to the body-side lower part (4).

5. Adjustable damping system (1) according to claim 4,
**characterised in that**
a maximum displacement of the position (13) of the seat-part-side upper part (3) relative to the body-side lower part (4) is given by the total damping travel (15) of the damping element (6), which is delimited by an upper (15a) and a lower damping travel end (15b), and a vertical position (16), forming the target value for the adjustment, of the seat-part-side upper part (3) relative to the body-side lower part (4) can be adjusted by way of a height setting device (17), a maximum settable vertical position (16a) being in a range of the total damping travel (15) which extends between a total damping travel centre (15c) and the upper damping travel end (15a), and a minimum settable vertical position (16b) being in a range of the total damping travel (15) which extends between a total damping travel centre (15c) and the lower damping travel end (15a).

6. Adjustable damping system (1) according to claim 5,
**characterised in that**
during displacement of the position (13) of the seat-part-side upper part (3), starting from the vertical position (16), the second damping force (12), adjustable by the adjustment device (5), of the damping element (6) is smaller within a comfort range (18) of the total damping travel (15) than outside the comfort range (18), the comfort range (18) being delimited by an upper (18a) and a lower comfort limit (18b), the comfort range (18) being a sub-range of the range of the total damping travel (15) delimited by the maximum settable vertical position (16a) and the minimum settable vertical position (16b), the second damping force (12) being constant within the comfort range (18) or increasing or decreasing with the distance between the position of the seat-part-side upper part and the vertical position, wherein during displacement of the position (13) of the seat-part-side upper part (3), starting from the maximum (16a) or minimum vertical position (16b), the comfort range (18) is limited to the maximum (16a) or the minimum vertical position (16b).

7. Adjustable damping system (1) according to either claim 5 or claim 6,
**characterised in that**
during displacement of the position (13) of the seat-part-side upper part (3), starting from the vertical position (16), the second damping force (12), adjustable by the adjustment device (5), of the damping element (6) grows linearly, outside the comfort range (18) of the total damping travel (15), with the distance between the position (13) of the seat-part-side upper part (3) and the vertical position (16).

8. Adjustable damping system (1) according to any of the preceding claims,
**characterised in that**
during displacement of the position (13) of the seat-part-side upper part (3), in the direction of the vertical position (16), a damping force of the damping element (6) which merely corresponds to the pre-adjusted basic damping force can be set by the adjustment device (5).

9. Adjustable damping system (1) according to any of the preceding claims,
**characterised in that**
a third damping force (19) of the damping element (6) can be adjusted by the adjustment device (5), it being possible to determine this third damping force (19) by way of the total damping travel (15), the presettable basic damping force, the position (13) of the seat-part-side upper part (3) relative to the body-side lower part (4), the movement direction (14), the magnitude of the speed, and a remaining damping travel of the seat-part-side upper part (3) relative to the body-side lower part (4), it being possible to determine the remaining damping travel from the total damping travel (15) and the position (13) of the seat-part-side upper part (3) relative to the body-side lower part (4), it being possible to determine the speed from at least two temporally successive positions (13) of the seat-part-side upper part (3) relative to the body-side lower part (4).

10. Adjustable damping system (1) according to claim 9,
**characterised in that**
the frequency range measured by the sensor device (8) comprises at least one resonant frequency, in a frequency interval extending from an initial frequency to the end frequency and containing the resonant frequency, the total damping force of the damping element (5) corresponding to the first damping force, and outside this frequency interval the total damping force of the damping element (5) being given by the sum of the second (12) and third damping forces (19).

11. Adjustable damping system (1) according to any of the preceding claims,
**characterised in that**
during displacement of the position (13) of the seat-part-side upper part (3), starting from the maximum vertical position (16a) and in the direction of the upper damping travel end (15a), or during displacement of the position (13) of the seat-part-side upper part (3), starting from the minimum vertical position (16b) and in the direction of the lower damping travel end (15b), a damping force of the damping element (6) which is increased by an end impact protection factor can be set by the adjustment device (5), during displacement of the position (13) of the seat-part-side upper part (3) in the opposite direction, it being possible for a damping force of the damping element without an end impact protection factor to be set by the adjustment device (5).

12. Vehicle seat (2) comprising an adjustable damping system (1) according to any of the preceding claims.

13. Method for adjusting an adjustable damping system (1) for a vehicle seat (2) for damping vibrations of a seat-part-side upper part (3) relative to a body-side lower part (4) in at least one spatial direction (X, Y, Z), at least one damping element (6), arranged between the seat-part-side upper part (3) and the body-side lower part (4) and adjustable by an adjustment device (5), being provided for the damping, the method comprising the following steps:
determining at least one relative movement variable and a change of the relative movement variable of the seat-part-side upper part (3) relative to the body-side lower part (4) by way of a sensor device (8);
adjusting a first damping force (25) of the damping element (6) by way of the adjustment device (5), the first damping force (25) being determined by the adjustment device (5) as a function of the at least one relative movement variable and a frequency of the change in the relative movement variable, wherein the first damping force (25) of the damping element (6) is adjusted by the adjustment device (5) as a function of a speed (V), an acceleration (B) and a jerk (R) of the seat-part-side upper part (3) relative to the body-side lower part (4).

## Revendications

1. Système d'amortissement réglable (1) pour un siège de véhicule (2) pour l'amortissement de vibrations d'une partie supérieure côté partie siège (3) par rapport à une partie inférieure côté carrosserie (4) dans au moins une direction spatiale (X, Y, Z), le système d'amortissement réglable comportant un dispositif de réglage (5), un élément d'amortissement (6) et un dispositif de détection (8), où, pour l'amortissement, est prévu au moins l'élément d'amortissement (6) disposé entre la partie supérieure côté partie siège (3) et la partie inférieure côté carrosserie (4) et réglable par le dispositif de réglage (5),
**caractérisé par le fait que**
par le dispositif de détection (8), au moins une grandeur de déplacement relatif et un changement de la grandeur de déplacement relatif de la partie supérieure côté partie siège (3) par rapport à la partie inférieure côté carrosserie (4) sont déterminables, et une première force d'amortissement (25) de l'élément d'amortissement (6) est ajustable par le dispositif de réglage (5) en fonction de ladite au moins une grandeur de déplacement relatif et d'une fréquence du changement de la grandeur de déplacement relatif,
dans lequel la première force d'amortissement (25) de l'élément d'amortissement (6) est ajustable par le dispositif de réglage (5) en fonction d'une vitesse (V), d'une accélération (B) et d'un à-coup (R) de la partie supérieure côté partie siège (3) par rapport à la partie inférieure côté carrosserie (4).

2. Système d'amortissement réglable (1) selon la revendication 1,
**caractérisé par le fait que**
la première force d'amortissement (25), ajustable par le dispositif de réglage (5), de l'élément d'amortissement (6) est proportionnelle à la somme d'une opérande de vitesse, d'une opérande d'accélération et d'une opérande d'à-coup, l'opérande de vitesse étant le produit d'un premier facteur d'amplification dépendant de la fréquence (K1(f)) et de la valeur de la vitesse (V), l'opérande d'accélération étant le produit d'un deuxième facteur d'amplification dépendant de la fréquence (K2(f)) et de la valeur de l'accélération (B), et l'opérande d'à-coup étant le produit d'un troisième facteur d'amplification dépendant de la fréquence (K3(f)) et de la valeur de l'à-coup (R).

3. Système d'amortissement réglable (1) selon la revendication 2,
**caractérisé par le fait que**
la plage de fréquence mesurée par le dispositif de détection (8) présente au moins une fréquence de résonance (fRes), où, dans un intervalle de fréquence (28), lequel s'étend d'une fréquence initiale (fA) jusqu'à la fréquence de résonance (fRes), la valeur de l'opérande d'accélération et la valeur de l'opérande d'à-coup augmentent, ce par quoi la première force d'amortissement (25) de l'élément d'amortissement (6) augmente, où, dans un intervalle de fréquence (28), lequel s'étend de la fréquence de résonance (fRes) jusqu'à une fréquence finale (fE), l'opérande d'à-coup est dominante, ce par quoi la première force d'amortissement (25) de l'élément d'amortissement (6) décroît.

4. Système d'amortissement réglable (1) selon l'une des revendications précédentes,
**caractérisé par le fait qu'**
une deuxième force d'amortissement (12) de l'élément d'amortissement (6) est ajustable par le dispositif de réglage (5), cette deuxième force d'amortissement (12) étant déterminable par le dispositif de réglage (5) sur la base d'une course d'amortissement totale (15) de l'élément d'amortissement (6), d'une force d'amortissement de base pré-ajustable par un dispositif d'ajustement d'amortissement (7), d'une position (13), mesurable par un dispositif de détection (8), de la partie supérieure côté partie siège (3) par rapport à la partie inférieure côté carrosserie (4), et d'une direction de déplacement (14) de la partie supérieure côté partie siège (3) par rapport à la partie inférieure côté carrosserie (4), la direction de déplacement (14) étant déterminable à partir d'au moins deux positions (13) se succédant dans le temps, mesurables par le dispositif de détection (8), de la partie supérieure côté partie siège (3) par rapport à la partie inférieure côté carrosserie (4).

5. Système d'amortissement réglable (1) selon la revendication 4,
**caractérisé par le fait qu'**
un déplacement maximal de la position (13) de la partie supérieure côté partie siège (3) par rapport à la partie inférieure côté carrosserie (4) est donné par la course d'amortissement totale (15) de l'élément d'amortissement (6), laquelle est délimitée par une fin de course d'amortissement supérieure (15a) et une fin de course d'amortissement inférieure (15b), et une position en hauteur (16), représentant la valeur de consigne du réglage, de la partie supérieure côté partie siège (3) par rapport à la partie inférieure côté carrosserie (4) est ajustable par un dispositif de réglage de hauteur (17), une position en hauteur ajustable au maximum (16a) se situant dans une plage de la course d'amortissement totale (15), laquelle s'étend entre un centre de course d'amortissement totale (15c) et la fin de course d'amortissement supérieure (15a), et une position en hauteur ajustable au minimum (16b) se situant dans une plage de la course d'amortissement totale (15), laquelle s'étend entre un centre de course d'amortissement totale (15c) et la fin de course d'amortissement inférieure (15a).

6. Système d'amortissement réglable (1) selon la revendication 5,
**caractérisé par le fait que**
lors d'un déplacement de la position (13) de la partie supérieure côté partie siège (3), à partir de la position en hauteur (16), la deuxième force d'amortissement (12), ajustable par le dispositif de réglage (5), de l'élément d'amortissement (6) est plus petite à l'intérieur d'une plage de confort (18) de la course d'amortissement totale (15) qu'à l'extérieur de la plage de confort (18), la plage de confort (18) étant délimitée par une limite de confort supérieure (18a) et une limite de confort inférieure (18b), la plage de confort (18) étant une sous-plage de la plage de la course d'amortissement totale (15), laquelle est délimitée par la position en hauteur ajustable au maximum (16a) et la position en hauteur ajustable au minimum (16b), la deuxième force d'amortissement (12) étant constante à l'intérieur de la plage de confort (18) ou augmentant ou diminuant avec la distance entre la position de la partie supérieure côté partie siège et la position en hauteur, où, lors d'un déplacement de la position (13) de la partie supérieure côté partie siège (3), à partir de la position en hauteur maximale (16a) ou minimale (16b), la plage de confort (18) est limitée à la position en hauteur maximale (16a), respectivement à la position en hauteur minimale (16b).

7. Système d'amortissement régable (1) selon l'une des revendications 5 ou 6,
**caractérisé par le fait que**
lors d'un déplacement de la position (13) de la partie supérieure côté partie siège (3), à partir de la position en hauteur (16), la deuxième force d'amortissement (12), ajustable par le dispositif de réglage (5), de l'élément d'amortissement (6), augmente linéairement à l'extérieur de la plage de confort (18) de la course d'amortissement totale (15), avec la distance entre la position (13) de la partie supérieure côté partie siège (3) et la position en hauteur (16).

8. Système d'amortissement réglable (1) selon l'une des revendications précédentes,
**caractérisé par le fait que**
lors d'un déplacement de la position (13) de la partie supérieure côté partie siège (3), en direction de la position en hauteur (16), par le dispositif de réglage (5), une force d'amortissement de l'élément d'amortissement (6) est ajustable, laquelle correspond simplement à la force d'amortissement de base pré-ajustée.

9. Système d'amortissement réglable (1) selon l'une des revendications précédentes,
**caractérisé par le fait que**
par le dispositif de réglage (5), une troisième force d'amortissement (19) de l'élément d'amortissement (6) est ajustable, cette troisième force d'amortissement (19) étant déterminable sur la base de la course d'amortissement totale (15), de la force d'amortissement de base pré- ajustable, de la position (13) de la partie supérieure côté partie siège (3) par rapport à la partie inférieure côté carrosserie (4), de la direction de déplacement (14), de la valeur de la vitesse et d'une course d'amortissement restante de la partie supérieure côté partie siège (3) par rapport à la partie inférieure côté carrosserie (4), la course d'amortissement restante étant déterminable à partir de la course d'amortissement totale (15) et de la position (13) de la partie supérieure côté partie siège (3) par rapport à la partie inférieure côté carrosserie (4), la vitesse étant déterminable à partir d'au moins deux positions (13) se succédant dans le temps de la partie supérieure côté partie siège (3) par rapport à la partie inférieure côté carrosserie (4).

10. Système d'amortissement réglable (1) selon la revendication 9,
**caractérisé par le fait que**
la plage de fréquence mesurée par le dispositif de détection (8) présente au moins une fréquence de résonance, où, dans un intervalle de fréquence, lequel s'étend d'une fréquence initiale jusqu'à la fréquence finale et contient la fréquence de résonance, la force d'amortissement totale de l'élément d'amortissement (5) correspond à la première force d'amortissement, et où, à l'extérieur de cet intervalle de fréquence, la force d'amortissement totale de l'élément d'amortissement (5) est donnée par la somme de la deuxième (12) et de la troisième force d'amortissement (19).

11. Système d'amortissement réglable (1) selon l'une des revendications précédentes,
**caractérisé par le fait que**
lors d'un déplacement de la position (13) de la partie supérieure côté partie siège (3), à partir de la position en hauteur maximale (16a) en direction de la fin de la course d'amortissement supérieure (15a), ou lors d'un déplacement de la position (13) de la partie supérieure côté partie siège (3), à partir de la position en hauteur minimale (16b) en direction de la fin de course d'amortissement inférieure (15b), par le dispositif de réglage (5), une force d'amortissement de l'élément d'amortissement (6) est ajustable, laquelle est augmentée par un facteur de protection d'impact de fin, où, lors d'un déplacement de la position (13) de la partie supérieure côté partie siège (3) en direction opposée, par le dispositif de réglage (5), une force d'amortissement de l'élément d'amortissement sans facteur de protection d'impact de fin est ajustable.

12. Siège de véhicule (2) comportant un élément d'amortissement réglable (1) selon l'une des revendications précédentes.

13. Procédé de réglage d'un système d'amortissement réglable (1) pour un siège de véhicule (2) pour l'amortissement de vibrations d'une partie supérieure côté partie siège (3) par rapport à une partie inférieure côté carrosserie (4) dans au moins une direction spatiale (X, Y, Z), où, pour l'amortissement, au moins un élément d'amortissement (6) disposé entre la partie supérieure côté partie siège (3) et la partie inférieure côté carrosserie (4), réglable par un dispositif de réglage (5), est prévu, le procédé comportant les étapes suivantes :
détermination d'au moins une grandeur de déplacement relatif et d'un changement de la grandeur de déplacement relatif de la partie supérieure côté partie siège (3) par rapport à la partie inférieure côté carrosserie (4) par un dispositif de détection (8) ;
ajustement d'une première force d'amortissement (25) de l'élément d'amortissement (6) par le dispositif de réglage (5), la première force d'amortissement (25) étant déterminée par le dispositif de réglage (5) en fonction de ladite au moins une grandeur de déplacement relatif et d'une fréquence du changement de la grandeur de déplacement relatif, la première force d'amortissement (25) de l'élément d'amortissement (6) étant ajustable par le dispositif de réglage (5) en fonction d'une vitesse (V), d'une accélération (B) et d'un à-coup (R) de la partie supérieure côté partie siège (3) par rapport à la partie inférieure côté carrosserie (4).
